# EUROPÄISCHE PATENTSCHRIFT

(11) **EP 4 618 891 B1**
(45) Veröffentlichungstag und Bekanntmachung des Hinweises auf die Patenterteilung: **14.10.2026**
(21) Anmeldenummer: 23805070.2
(22) Anmeldetag: 15.11.2023
(51) Int. Cl.: A61C 8/00

(54) **FORMPFOSTEN INSBESONDERE FÜR DIE ERZEUGUNG EINER DENTALEN ABFORMUNG**
MOULDING POST, IN PARTICULAR FOR PRODUCING A DENTAL IMPRESSION,
PILIER DE MOULAGE, EN PARTICULIER POUR LA RÉALISATION D'UNE EMPREINTE DENTAIRE

(30) Priorität: 18.11.2022 EP 22208262
(43) Veröffentlichungstag der Anmeldung: 24.09.2025
(73) Patentinhaber: Thommen Medical AG, 2540 Grenchen (CH)
(72) Erfinder: GREGG, Daniel, 3296 Arch (CH); FABBRI, Sandro, 4450 Sissach (CH)
(74) Vertreter: Bremi, Tobias Hans
(86) Internationale Anmeldenummer: PCT/EP2023/081849
(87) Internationale Veröffentlichungsnummer: WO 2024/105077

(56) Entgegenhaltungen:
- WO-A1-2013/150356
- WO-A1-2013/150356
- US-A1- 2017 165 035
- US-A1- 2017 165 035

## Beschreibung

### TECHNISCHES GEBIET

Die vorliegende Erfindung betrifft einen Formpfosten, insbesondere für die Erzeugung einer dentalen Abformung, oder aber auch zur Verwendung als Provisoriumsaufsatz, sowie entsprechende angepasste dentale Bauteile, insbesondere Implantate und Implantataufsätze (Abutments).

### STAND DER TECHNIK

Unter der Abformung ist ein Verfahrensschritt in der Zahnmedizin und in der Defektprothetik zu verstehen. Mit dem Abdruck von Zähnen, Kiefer und von gesetzten Implantaten, fertigt der Zahntechniker den Zahnersatz (Krone oder Brücke). Die Abformung ist also die Herstellung eines Abdrucks unter Zuhilfenahme einer Spezialmasse, typischerweise plastischen Abformmassen wie beispielsweise thermoplastische Kunststoffe oder Alginat, Silikone oder Gips etc.

Wichtig ist, dass sich die Abformung vom Kiefer trennen lässt, ohne dass eines der beiden beschädigt wird, und dass die exakte Position der meist bereits eingewachsenen oder auch gerade gesetzten Implantate im Abdruck reflektiert ist. Problematisch ist es, wenn die abzuformende bestehende und nicht zu ersetzende Struktur umgriffen wird und nicht nur von der Abformmasse bedeckt ist. Auf der anderen Seite ist problematisch, wenn sogenannte Abformpfosten, die auf die Implantate gesetzt werden, um ein entsprechendes Abbild der exakten Position des Implantats zu erhalten, nicht exakt nach der Entfernung der Abformmasse in dieser in der Position gehalten sind.

Für die Abformung werden thermoplastische und duroplastische Materialien mit in gewissem Umfang elastischen Eigenschaften verwendet. Während der Abformung muss sich die Abformmasse möglichst gut an die abgeformte Oberfläche anpassen und anschliessend die eingenommene Form nach der Abformung möglichst nicht mehr verändern.

WO-A-2013/150356 beschreibt einen Übertragungszylinder für Zahnimplantate aus einem Stück, bestehend aus einem Körper und einem Einführteil, dadurch gekennzeichnet, dass das Einführteil aus einem ersten Kopfelement besteht, das mit dem Körper verbunden ist und mindestens einem zweiten Kopfelement, das mit dem ersten Kopfelement verbunden ist, wobei das mindestens eine zweite Kopfelement von dem ersten Kopfelement trennbar ist, und wobei das erste wobei das Kopfelement einen kreisförmigen Querschnitt und das mindestens eine zweite Kopfelement einen vieleckigen Querschnitt aufweist, oder umgekehrt.

US-A-2017/165035 beschreibt eine zweiteilige Zahnimplantat-Befestigungshalterung mit einem Basisabschnitt für die Implantat-Befestigungshalterung an ihrem distalen Ende und einem aufschnappbaren, separaten, trennbaren Oberteil an ihrem proximalen Ende, wobei das Oberteil eine Eingriffsfläche für das Einführwerkzeug aufweist, eine distale zylindrische Schürze mit einer Vielzahl von Vorsprüngen auf der Innenfläche der Schürze und einen distalen Einführvorsprung, wobei der Halterungsbasisabschnitt einen trennbaren proximalen Abschnitt umfasst, der eine Nut in der Nähe des Bodens des trennbaren proximalen Abschnitts zum Eingriff mit den Vorsprüngen aufweist, einen Längsdurchgang zur Aufnahme einer Befestigungsschraube zur Befestigung des Basisteils der Vorrichtungshalterung an einem Zahnimplantat, und der einen inneren, mehrseitigen Bereich zum verdrehsicheren Eingriff in den distalen Einführvorsprung.

### DARSTELLUNG DER ERFINDUNG

Problematisch in diesem Zusammenhang ist, dass die für die Abformung vorgesehenen Abformpfosten wegen der unterschiedlichen räumlichen Verhältnisse in verschiedenen Längen vorgelegt und im Lager gehalten werden müssen, damit auf die jeweiligen individuellen Verhältnisse angepasst die richtigen Abformpfosten eingesetzt werden können.

Möglich ist es in diesem Zusammenhang, solche Abformpfosten nur in einer maximalen Länge vorzuhalten und vor dem Einsatz abzulängen, in dem sie auf die richtige Länge getrennt, z.B. spanabhebend abgesägt oder abgeschliffen werden. Dabei ist problematisch, dass diese Schritte vor dem Einsetzen in der Praxis durchgeführt werden müssen, und durch die Trennverfahren sowohl eine Schwächung der mechanischen Eigenschaften resultieren kann, als auch insbesondere durch die entsprechenden Bearbeitungsschritte undefinierte scharfe Kanten entstehen können und Staub im sterilen Bereich gebildet werden kann. Zudem können Rückstände auf dem Abformpfosten verbleiben, was eine erneute Reinigung/Desinfektion kurz vor dem Einsetzen durch den Anwender erfordert und das sterile Handling damit einschränkt. Weiter resultiert eine Verlängerung der Behandlungszeit, insbesondere bei grossen Versorgungen auf mehreren Implantaten. Gerade hierbei erfolgt die Abformung oft perioperativ wobei die Zeit nicht nur ein wirtschaftlicher Faktor ist, sondern auch für die Sorgfalt und die Fehleranfälligkeit im Prozess entscheidend ist.

Die analoge Problematik stellt sich bei Provisoriumsaufsätzen (auch provisorische Implantateinsätze, provisorische Versorgungsaufsätze oder Provisoriumsabtuments genannt) für die Herstellung von provisorischem Zahnersatz. Diese können direkt oder indirekt (über einen Implantateinsatz) mit dem enossalen Zahnimplantat verbunden sein und dienen als Hilfsmittel bei der prothetischen Rehabilitation. Provisorische Implantateinsätze können vor dem Eingliedern des endgültigen Zahnersatzes verwendet werden, um das Weichgewebe während der Heilungsphase zu erhalten, zu stabilisieren und zu formen (Weichgewebskonditionierung). Die Anwendung von provisorischen Implantateinsätzen erfolgt temporär über wenige Wochen oder Monate.

Provisorische Einzelzahn- oder Brückenversorgungen stehen wenn möglich nicht in Okklusion, um die Belastung durch Kaukräfte stark zu reduzieren. Zum einen können klinische (keine Störung der Einheilung des Implantats), aber auch mechanische Aspekte, wie die Festigkeit der provisorischen Versorgung (meist Kunststoffe), Gründe dafür sein. Auch diese Provisoriumsaufsätze werden wie vorne für die Abformpfosten geschildert auf die geforderte Länge vor Ort abgelängt, und dabei stellen sich die gleichen/analogen Probleme.

Reine Abformpfosten dienen zur Bestimmung der Implantatposition (Registrierung der vertikalen und horizontalen Relation) und werden überwiegend vorübergehend eingesetzt. Die im Vergleich zum Provisoriumsabutment verschiedenen, funktionellen Anforderung zeigen sich in spezifischen Designmerkmalen:
- Auslegung der Makroretention
- Nicht lasttragend
- Materialwahl

Hier greift die vorliegende Erfindung ein.

Gegenstand der vorliegenden Erfindung ist entsprechend ein Formpfosten gemäß Anspruch 1, solche Formpfosten in Kombination mit korrespondierenden Implantaten oder Implantateinsätzen gemäss Anspruch 14 sowie ein Verfahren zur Ausbildung einer Abformung nach Anspruch 15. Vorteilhafte Ausführungsbeispiele sind in den abhängigen Ansprüchen definiert.

Konkret betrifft die vorliegende Erfindung gemäß einem ersten Aspekt einen Formpfosten, insbesondere für die Erzeugung einer Abformung auf Implantatniveau oder auf dem Niveau eines Implantateinsatzes in Bezug auf bereits gesetzte Implantate, oder zur Verwendung als Provisoriumsaufsatz.

Dabei verfügt der Formpfosten über einen im wesentlichen zylindrischen Pfosten mit einer Durchgangsöffnung für wenigstens eine axiale Befestigungsschraube am Implantat oder einem Implantateinsatz. Typischerweise wird der Formpfosten so auf das Implantat oder einen Implantateinsatz, der zuvor auf/in das Implantat gesetzt wurde, aufgeschraubt, indem der Formpfosten aufgesetzt wird, die Befestigungsschraube durch die Durchgangsöffnung geführt wird und im Implantat respektive am/im Implantateinsatz befestigt wird. Nach der Abformung oder nach der Tragdauer des Provisoriumsaufsatzes werden diese Schrauben wieder gelöst und die Abformung kann anschließend zusammen mit den Abformpfosten entnommen werden und für die Weiterverarbeitung eingesetzt werden, respektive beim Provisoriumsaufsatz dieser abgenommen und die Behandlung fortgesetzt werden. Erfindungsgemäß verfügt der Formpfosten bevorzugt entlang des zylindrischen Pfostens über wenigstens drei radiale Erweiterungen, zwischen denen wenigstens zwei Verjüngungen ausgebildet sind. Diese Strukturierung erlaubt den in der Einleitung genannten Formschluss zwischen der Abformmasse und dem Formpfosten, respektive Kaltpolymerisat zwischen Provisoriumsaufsatz und dem Provisoriumsaufbau.

Weiter ist ein erfindungsgemäßer Formpfosten dadurch gekennzeichnet, dass er an seinem apikalen, d. h. dem Implantat zugewandten Ende über wenigstens eine definierte Anlagefläche zur Anlage an wenigstens eine korrespondierende Anlagefläche an einem Implantat oder an wenigstens eine korrespondierende Anlagefläche an einem zwischen dem Formpfosten und dem Implantat angeordneten Implantateinsatz verfügt. Diese korrespondierenden und aufeinander angepassten Anlageflächen sind entscheidend, da nur dann gewährleistet ist, dass der Formpfosten in definierter Weise auf dem Implantat oder auf einem Implantateinsatz befestigt ist und nach dessen Entfernung auch die korrekte räumliche Orientierung und Position des eingewachsenen Implantats in der Abformung reflektiert, wenn als Abformpfosten eingesetzt.

Damit die Abformung optimal durchgeführt werden kann, respektive das Provisorium im Falle eines Provisoriumsaufsatzes optimal ausgelegt und befestigt werden kann, sollten, wie eingangs erwähnt, die Formpfosten die richtige Länge haben.

Erfindungsgemäß wird nun vorgeschlagen, dass wenigstens eine der Verjüngungen des Formpfostens eine Sollbruchstelle aufweist, normalerweise in der Wandstärke zwischen den Erweiterungen, wobei die dem apikalen Ende am nächsten zugewandte Verjüngung keine Sollbruchstelle aufweist, und/oder die wenigstens zwei Verjüngungen des Formpfostens jeweils wenigstens eine Sollbruchstelle aufweisen. So ist es nun unter Vermeidung der oben genannten Nachteile möglich, in der Praxis und direkt vor Ort die gewünschte Länge des Formpfostens einfach einzustellen, wobei eine zu große Länge gekürzt wird, indem die gewünschte Anzahl von Erweiterungen einfach an der Sollbruchstelle abgeknickt wird. Dies beispielsweise einfach von Hand, oder aber unter Zuhilfenahme einer kleinen Zange oder Pinzette oder sonstigen in der Hand gehaltenen Vorrichtung, zweiter Zange oder Pinzette oder sonstigen in der Hand gehaltenen Vorrichtung, oder auch einer entsprechenden beispielsweise an einem Tisch vorgesehenen Greifvorrichtung/Klemmvorrichtung, in die der zu entfernende Teil befestigt oder sogar eingerastet werden kann.

Dies ist so insbesondere der genannten WO-A-2013/150356 nicht zu entnehmen und auch durch diese nicht nahegelegt: Dort geht es darum, dass ein Bauteil für zwei unterschiedliche Anwendungssituationen verwendet werden kann, und dafür der Befestigungsbereich 3 mit zwei aufeinander folgenden Kopfelementen 3a und 3b ausgestattet ist: In seiner ungekürzten Form wird das Bauteil für die Abformung der Orientierung eines einzelnen Implantates, z.B. für eine Einzelzahnversorgung, eingesetzt. Dabei wird ein Rotationsindex benötigt, das abgerundete Dreieck (Polygon) am äusseren terminalen Kopfelement 3b. Hier wird das Bauteil also mit beiden Kopfteilen 3a und 3b verwendet. Wird eine Abformung gleichzeitig auf mehreren Implantaten vorgenommen, also gleichzeitig mehrere Bauteile verwendet, z.B. für eine Brückenversorgung, so behindert ein Rotationsindex die Funktion, konkret das Herausnehmen der Brücke bei divergierenden Implantaten. Für diese Verwendung wird deshalb das äussere Kopfelement 3b abgetrennt und das Bauteil ohne dieses äussere Kopfelement 3b mit dem verbleibenden Kopfelement 3a als Schnittstelle zum Implantat verwendet. Die Sollbruchstelle der WO-A-2013/150356 dient somit lediglich dazu, die Partie 3b, den z.B. für eine Brückenversorgung funktionseinschränkenden Rotationsindex zu entfernen und nicht zum Kürzen bzw. einfacheren Kürzen des Abformpfostens, um die Höhe den beispielsweise anatomischen Verhältnissen anzupassen. Für den Zweck der WO-A-2013/150356 muss zwingend die Sollbruchstelle in der Verjüngung angeordnet sein, die dem apikalen Ende am nächsten zugewandt ist, und es gibt nur eine einzige Sollbruchstelle.

Die Sollbruchstelle an dem hier vorgeschlagenen Formpfosten dient dagegen dazu, diesen einfacher kürzen zu können, unabhängig davon, ob der Formpfosten zur reinen Abformung oder als Provisorium verwendet werden soll, und auch nicht dazu das Produkt für unterschiedliche Anwendungssituationen (Einzelzahn vs. Brücken) verwendbar zu machen. Wie hier vorgeschlagen muss eine dem apikalen Ende am nächsten zugewandte Verjüngung zwischen zwei (vorzugsweise identischen) radialen Erweiterungen (Makroretention) keine Sollbruchstelle aufweisen, und/oder es muss zwei Sollbruchstellen zwischen jeweils zwei (vorzugsweise identischen) radialen Erweiterungen geben.

Eine Sollbruchstelle ist dabei eine durch eine geeignete Struktur, Gestalt oder Konstruktion (z.B. eine Materialverjüngung) bestimmte Stelle in der Verjüngung des Formpfostens, die bei Belastung oder Überlast im Bereich dieser Verjüngung vorhersagbar bricht. Das kann zum Beispiel eine Kerbe, eine Perforation oder eine Ritzspur sein, die im vorliegenden Fall dazu führt, dass bevorzugt nach dem Abbrechen der übrigbleibende, auf das Implantat aufzusetzende Teil des Formpfostens eine definierte umlaufende im Wesentlichen auf gleicher Höhe liegende Abbruchkante aufweist, die bevorzugt nicht nachbearbeitet werden muss.

Eine Sollbruchstelle dient also grundsätzlich dazu, dass eine Konstruktion an einer bestimmten Stelle in einem definierten Belastungsbereich vorhersagbar bricht. Dabei ist die Sollbruchstelle zweckspezifisch durch eine definierte geometrische Ausführung, welche meist einer Querschnittsreduktion entspricht, bestimmt.

Konstruktiv lässt sich die Sollbruchstelle u.a. durch eine sogenannte Kerbe realisieren. Dabei werden alle Querschnittsänderungen, die den gleichmässigen Kraftfluss stören, als Kerben bezeichnet.

Die Tragfähigkeit einer Konstruktion kann durch eine Kerbe (Sollbruchstelle) deutlich reduziert werden, da die Spannungen in der Umgebung der Störung stark von der errechneten Nennspannung im Querschnitt abweichen.

Die Spannungsvergrösserung ist abhängig von der Form der Kerbe und dem Material. Der Vorteil durch die konstruktive Integration einer Sollbruchstelle besteht eben u.a. darin, dass sich mindestens zwei Abschnitte, je nach Gestaltung einfach von Hand oder mithilfe von nicht spanabhebenden Werkzeugen, z.B. einer Zange voneinander trennen lassen. Für eine Sollbruchstelle, die mit einer Zange und von Hand abbrechbar sein soll, ergeben sich typischerweise folgende Parameter: Bei einer Hebellänge von L = 8 mm ist namentlich eine Bruchlast F im Bereich von 10 bis 40 N, vorzugsweise im Bereich von 15 bis 35 N, eingestellt. Diese Werte gelten insbesondere für die Verwendung als Abformpfosten, für die Verwendung als Provisoriumsaufsatz sind auch höhere Werte möglich respektive bevorzugt, namentlich ist für diese Verwendungen eine Bruchlast F im Bereich von 20 bis 60 N, vorzugsweise im Bereich von 30 bis 50 N eingestellt. Alternativ ausgedrückt wird die Sollbruchstelle so eingestellt, dass für die Verwendung als Abformpfosten, ein Bruchmoment im Bereich von 80 bis 320 Nmm, vorzugsweise im Bereich von 120 bis 280 Nmm, und, für die Verwendung als Provisoriumsaufsatz, namentlich ein Bereich von 160 bis 480 Nmm, vorzugsweise ein Bereich von 240 bis 400 Nmm entsteht.

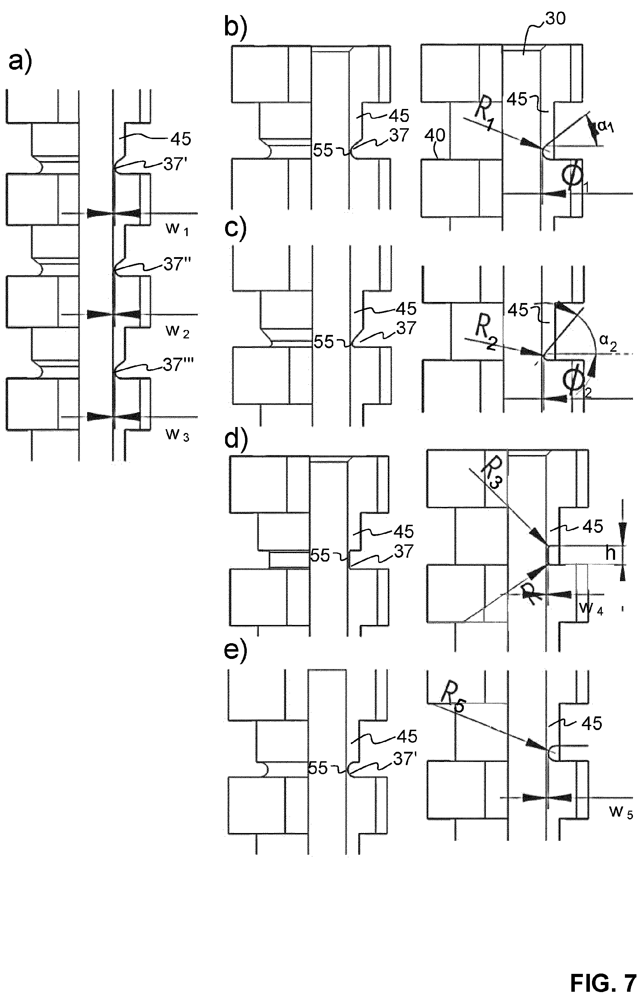

Für eine Abformkappe aus Titan Grade 4 kalt verfestigt mit einem Kreisrohrquerschnitt und der Kerbgeometrie gemäss **Fig. 7b** (Sollbruchstelle 37), ergeben sich typischerweise die Parameter aus Tabelle 1:

| Verbleibende Wandstärke | Bruchlast F | Hebellänge L | Bruchmoment M |
|---|---|---|---|
| 0.03mm | 16 N | 8 mm | 128 Nmm |
| 0.06mm | 32 N | 8 mm | 256 Nmm |

Die entsprechenden Parameter werden bestimmt, wie dies weiter unten dargelegt wird. Bei der Benutzung von zwei Zangen sind auch grössere Wandstärken als im obigen Abschnitt angegeben möglich, und die Parameter verändern sich bei Verwendung von anderen Materialien (beispielsweise Kunststoff, Aluminium oder Stahl) bei gleicher Geometrie. Bei einem Formpfosten aus Titan wird i.d.R. eine Wandstärke von 0.3 mm nicht unterschritten. Bei einer Sollbruchstelle, zum Beispiel in Form einer umlaufenden Kerbe, wird diese Wandstärke namentlich um vorzugsweise 30 bis 99 %, insbesondere bevorzugt um 75 bis 90 % reduziert. Bei einer Sollbruchstelle, zum Beispiel in Form einer umlaufenden Kerbe, liegt die bevorzugte verbleibende Wandstärke namentlich im Bereich von 0.02 bis 0.2 mm, insbesondere bei 0.03 bis 0.07 mm.

Gemäß einer ersten bevorzugten Ausführungsform ist ein solcher Formpfosten dadurch gekennzeichnet, dass er 4 oder 5 radiale Erweiterungen aufweist, zwischen denen entlang der Verlaufsrichtung des Formpfostens jeweils Verjüngungen ausgebildet sind. Vorzugsweise sind die oberhalb einer ersten, dem apikalen Ende am nächsten zugewandten Erweiterung (apikaler Fussbereich) vorgesehenen radialen Erweiterungen identisch ausgebildet, insbesondere in Bezug auf deren Formgebung.

Vorzugsweise sind bei solchen Formpfosten die Verjüngungen als vorzugsweise für die mehreren Verjüngungen gleich gestaltete Rechtecknuten (gegebenenfalls mit abgerundeten Kanten) ausgebildet.

Bevorzugt ist dabei in der am koronalen Ende angeordneten Verjüngung oder in der zweiten oder dritten Verjüngung gezählt vom koronalen Ende des Formpfostens eine einzige Sollbruchstelle angeordnet. Bei dieser Bauweise gibt es mit anderen Worten genau eine Sollbruchstelle, und es ist möglich, den Formpfosten in einer langen (eingesetzt ohne Manipulation) und in einer kurzen Variante (eingesetzt nach Entfernung des Teils, der in koronaler Richtung über die Sollbruchstelle hervorragt) bereitzustellen.

In der dem apikalen Ende am nächsten zugewandten Verjüngung ist vorzugsweise keine Sollbruchstelle vorgesehen. Der Formpfosten kann mehr als drei, vorzugsweise 4 oder 5 radiale Erweiterungen, vorzugsweise identische radiale Erweiterungen oberhalb einer ersten dem apikalen Ende am nächsten zugewandten Erweiterung, aufweist, zwischen denen entlang der Verlaufsrichtung des Formpfostens jeweils Verjüngungen ausgebildet sind, und wobei in der am koronalen Ende angeordneten Verjüngung oder in der zweiten oder dritten Verjüngung gezählt vom koronalen Ende des Formpfostens jeweils eine einzige Sollbruchstelle angeordnet ist, oder in der ersten und der zweiten, oder in der zweiten und der dritten, oder in allen Verjüngungen jeweils eine einzige Sollbruchstelle angeordnet ist. Eine weitere bevorzugte Ausführungsform eines solchen Formpfostens ist dadurch gekennzeichnet, dass er 4 oder 5 radiale Erweiterungen aufweist, zwischen denen entlang der Verlaufsrichtung des Formpfostens jeweils Verjüngungen ausgebildet sind, wobei vorzugsweise wiederum die Verjüngungen als vorzugsweise für die mehreren Verjüngungen gleich gestaltete Rechtecknuten (gegebenenfalls mit Abrundungen an den Eckbereichen) ausgebildet sind.

Hier sind nun bevorzugt in wenigstens zwei Verjüngungen, oder in wenigstens drei Verjüngungen Sollbruchstellen vorgesehen, und zwar vorzugsweise in wenigstens zwei der folgenden Verjüngungen: in der am koronalen Ende angeordneten Verjüngung, in der zweiten und/oder der dritten Verjüngung gezählt vom koronalen Ende des Formpfostens. Bevorzugtermassen werden, zum Beispiel durch Einstellung der entsprechenden einer entsprechenden minimalen Wandstärke im Bereich der jeweiligen Sollbruchstelle die mehreren Sollbruchstellen so ausgebildet, dass die Kraft, um den Abformpfosten bei der am weitesten in koronaler Richtung angeordneten Sollbruchstelle zu kürzen, geringer ist, als bei den in apikaler Richtung folgenden Sollbruchstellen. So wird sichergestellt, dass bei der Manipulation des Abformpfostens sukzessive gekürzt wird und nicht aus Versehen, obwohl nur ein Segment abgetrennt werden soll, gleich bei der ersten Manipulation zu weit unten abgetrennt wird.

Gemäß einer weiteren bevorzugten Ausführungsform ist die Sollbruchstelle in Form einer vorzugsweise umlaufenden Vertiefung im Nutboden der Verjüngung(en) ausgebildet. Bei einer solchen Vertiefung als Sollbruchstelle ist vorzugsweise die Wandstärke im Vergleich zur restlichen Wandstärke des Pfostens im Bereich des Nutbodens der Verjüngung um wenigstens 30 % reduziert, vorzugsweise um wenigstens 50 %, insbesondere bevorzugt um wenigstens 70 % reduziert.

Alternativ ist es möglich, die Sollbruchstelle in Form einer umlaufenden Reihe von Perforationen in Form von Löchern oder Schlitzen auszubilden, wobei die Perforationen durchgehend sein können, oder aber auch in Form von einer Reihe von Sacklöchern ausgebildet sein kann. Die Löcher können dabei asymmetrisch, vorzugsweise jedoch gleichmäßig über den Umfang verteilt sein, namentlich 8 bis 28 Löcher, vorzugsweise sind 8 bis 16 derartige Löcher vorgesehen. Es können auch Schlitze vorgesehen sein, beispielsweise zwei gegenüberliegende Schlitze oder eine Reihe von Schlitzen. Im Fall von Sacklöchern verfügen diese dann vorzugsweise über eine Tiefe, dass die Wandstärke am Boden um wenigstens 70 %, vorzugsweise um wenigstens 80 % relativ zur restlichen Wandstärke des Pfostens im Bereich der Verjüngung beträgt.

Es ist auch möglich, die Sollbruchstelle als Kombination einer vorzugsweise umlaufenden Vertiefung und einer derartigen Reihe von Löchern auszubilden, die Löcher sind dann vorzugsweise im Bereich der Vertiefung ausgebildet.

Vorzugsweise ist eine solche umlaufende Vertiefung angrenzend an die apikal angrenzende Erweiterung ausgebildet, sodass, wenn dort getrennt wird, kein Pfostenstumpf über die dann am koronalen Ende angeordneten Erweiterung hervorsteht, mithin das koronale Ende im Wesentlichen als Fläche nach der Trennung verbleibt. Bevorzugtermassen ist die Sollbruchstelle in Form einer umlaufenden Vertiefung im Schnitt in Halbkreisform (einschließlich entsprechend ovaler Formen), in Rechteckform (einschließlich quadratischer Formen), oder in Dreieckform ausgebildet. Im letzteren Fall vorzugsweise mit einer Spitze zur Achse gerichtet und mit einer Flanke parallel und anschließend an die radiale Flanke der apikal angrenzenden Erweiterung und einer in koronaler Richtung erweiternden Flanke, vorzugsweise mit einem abgerundeten Boden. Typischerweise ist ein solcher Formpfosten dadurch gekennzeichnet, dass die Wandstärke des Pfostens bei der Sollbruchstelle geringer ist als die Wandstärke im Bereich der Verjüngung des Pfostens an dieser Stelle, und auf eine Stärke an der dünnsten Stelle von weniger als 0.3 mm, vorzugsweise weniger als 0.2 mm, insbesondere vorzugsweise höchstens 0.15 mm, höchstens 0.10 mm oder höchstens 0.05 mm, vorzugsweise im Bereich von 0.03 und 0.07mm (Titan, umlaufende Kerbe), ausgebildet ist. Gibt es mehrere Sollbruchstellen, wird vorzugsweise die verbleibende minimale Wandstärke bei der jeweiligen Sollbruchstelle vom koronalen Ende her zunehmend ausgebildet, damit die Trennkraft vom koronalen zum apikalen Ende zunimmt, beispielsweise indem die am meisten koronal angeordnete Sollbruchstelle eine verbleibende Wandstärke von 0.05 mm aufweist, die dann in apikaler Richtung folgende Sollbruchstelle in der nächsten Vertiefung über eine verbleibende Wandstärke von 0.10 mm, und die am meisten in apikaler Richtung angeordnete Sollbruchstelle in einer folgenden Vertiefung über eine verbleibende Wandstärke von 0.15 mm.

Typischerweise besteht ein solcher Formpfosten aus einem Kunststoff (auch in glasfaserverstärkter Form) oder einem metallischen Werkstoff, im letzteren Fall vorzugsweise aus Titan (Titan Grade 4) respektive einer entsprechenden Legierung, vorzugsweise einer Titanlegierung oder Aluminiumlegierung, (z.B. Titan-Aluminium-Niob oder Titan-Aluminium-Vanadium), und wobei der Abformpfosten bevorzugt einen Außendurchmesser im Bereich von 1 bis 12 Millimeter, insbesondere bevorzugt im Bereich von 2.5 bis 7 Millimeter aufweist und die Durchgangsbohrung im koronalen Abschnitt einen Innendurchmesser im Bereich von 1 - 5 Millimeter, insbesondere bevorzugt im Bereich von 1.5 - 3 Millimeter.

Typischerweise ist ein solcher Formpfosten, dadurch gekennzeichnet, dass die Durchgangsbohrung in apikaler Richtung eine verjüngende, vorzugsweise umlaufende Schulter aufweist, die als Anschlag einer entsprechenden Verjüngung der Befestigungsschraube vorgesehen ist. So wird sichergestellt, dass die Befestigungsschraube den Formpfosten nicht an der koronalen Endfläche fixiert, sondern in der Durchgangsbohrung über die entsprechende umlaufende Schulter, um eine präzisere Befestigung nahe beim Implantat zu gewährleisten.

Der Formpfosten hat an seinem apikalen Ende bevorzugt wenigstens eine Anlagefläche zur Anlage an wenigstens eine korrespondierende gestufte und/oder konische Anlagefläche an einem Implantat, vorzugsweise in Kombination mit einer Formgebung im Sackloch des Implantats und einer korrespondierenden Formgebung am Formpfosten zur Verhinderung der Drehung des Formpfostens relativ zum Implantat (beispielsweise polygonale Querschnittsfläche, zum Beispiel hexagonal).

Oder der Formpfosten verfügt an seinem apikalen Ende über wenigstens eine Anlagefläche zur Anlage an wenigstens eine korrespondierende gestufte und/oder konische Anlagefläche an einen zwischen dem Formpfosten und dem Implantat angeordneten Implantateinsatz, der in ein Sackloch des Implantats eingeschraubt ist.

Gemäß einer weiteren Ausführungsform ist die Sollbruchstelle dazu geeignet, vor der Verwendung z.B. in der Abformung mit einem Greifwerkzeug, vorzugsweise mit einer Zange, zur Ablängung des Formpfostens eingesetzt zu werden, indem koronal von der jeweiligen Sollbruchstelle angeordnete Abschnitte des Formpfostens durch Abbrechen entfernt werden können.

Weiterhin ist nach Anspruch 14 Gegenstand der vorliegenden Erfindung ein Formpfosten wie oben beschrieben in Kombination mit einem entsprechend korrespondierenden und an den Formpfosten zur direkten Anlage vorgesehenen Implantat,
oder in Kombination mit einem entsprechenden korrespondierenden und an den Formpfosten zur direkten Anlage vorgesehenen Implantateinsatz und/oder mit einem entsprechenden korrespondierenden, an den Implantateinsatz zur direkten Anlage vorgesehenen Implantat.

Weiterhin betrifft die vorliegende Erfindung nach Anspruch 15 ein Verfahren zur Ausbildung einer Abformung oder eines Provisoriums, dadurch gekennzeichnet, dass auf wenigstens ein eingesetztes Implantat wenigstens ein Formpfosten wie oben beschrieben entweder direkt oder über einen Implantateinsatz aufgesetzt und mit einer durch die Durchgangsöffnung geführten Befestigungsschraube verbunden wird,
eine plastische Formmasse über den Abformpfosten und unter Ausbildung einer formschlüssigen Verbindung zwischen Abformpfosten und der plastischen Formmasse gelegt und angeformt wird,
und anschließend die Befestigungsschraube entfernt und die Abformung für die Ausbildung eines Zahnaufbaus verwendet wird,
wobei zur Einstellung der geeigneten Länge wenigstens eines Formpfostens vor dessen direkter oder indirekter Befestigung am Implantat dieser unter Zuhilfenahme der Sollbruchstelle ohne spanabhebendes Werkzeug abgelängt wird.

Beschrieben jedoch nicht Teil der Erfindung ist auch ein Implantateinsatz geeignet und angepasst zur Verwendung mit einem Formpfosten wie oben beschrieben mit korrespondierenden und an den Formpfosten zur direkten Anlage vorgesehenen Anlageflächen und Außenkonturen, sowie ein Implantat geeignet und angepasst zur Verwendung mit einem Formpfosten wie oben beschrieben mit korrespondierenden und an den Formpfosten zur direkten Anlage vorgesehenen Anlageflächen und Außenkonturen. Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

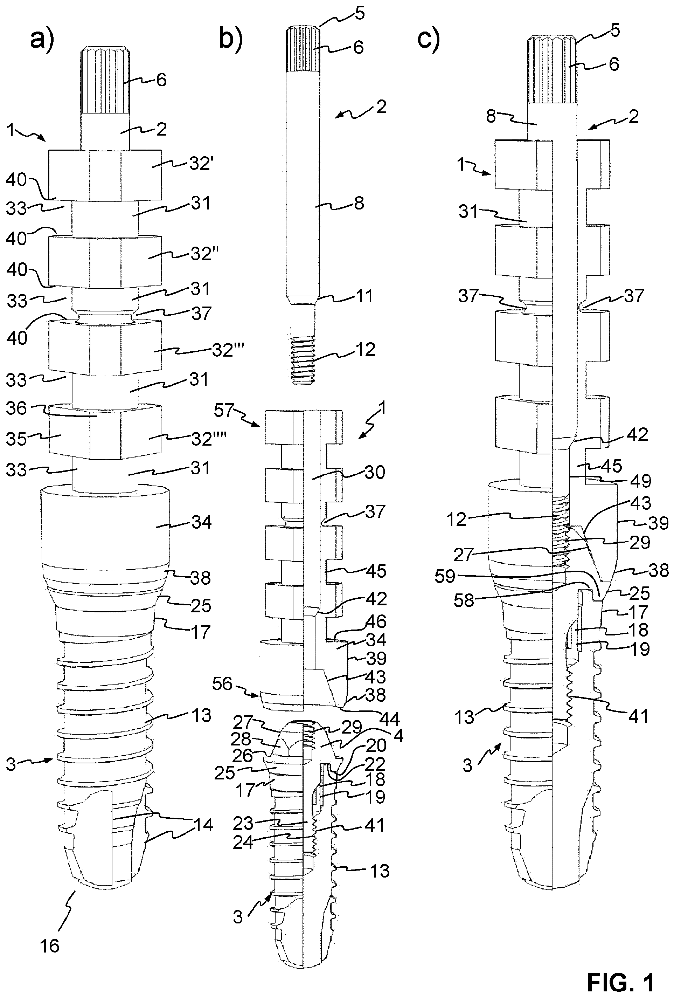

- Fig. 1: einen Formpfosten als Abformpfosten gemäß einem ersten Ausführungsbeispiel zur Verwendung mit einem Implantateinsatz, wobei in a) eine Seitenansicht im mit dem Implantat verbundenen Zustand dargestellt ist, in b) eine Seitenansicht, bei dem die Schraube und der Abformpfosten separat dargestellt ist aber der Implantateinsatz im Implantat befestigt ist, und in c) eine Seitenansicht mit Teilschnitt auf der rechten Seite dargestellt ist;

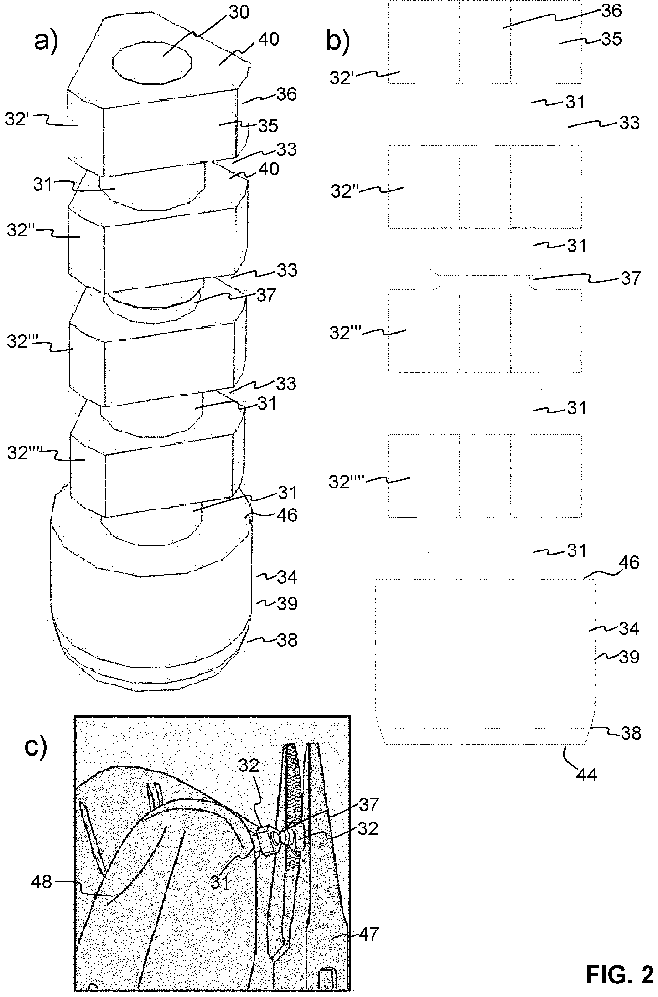

- Fig. 2: den Abformpfosten gemäß Fig. 1 allein in einer perspektivischen Ansicht in a) von schräg oben, sowie in einer Seitenansicht in b) und in c) eine Illustration der Manipulation des Abformpfostens unter Zuhilfenahme der Sollbruchstelle;

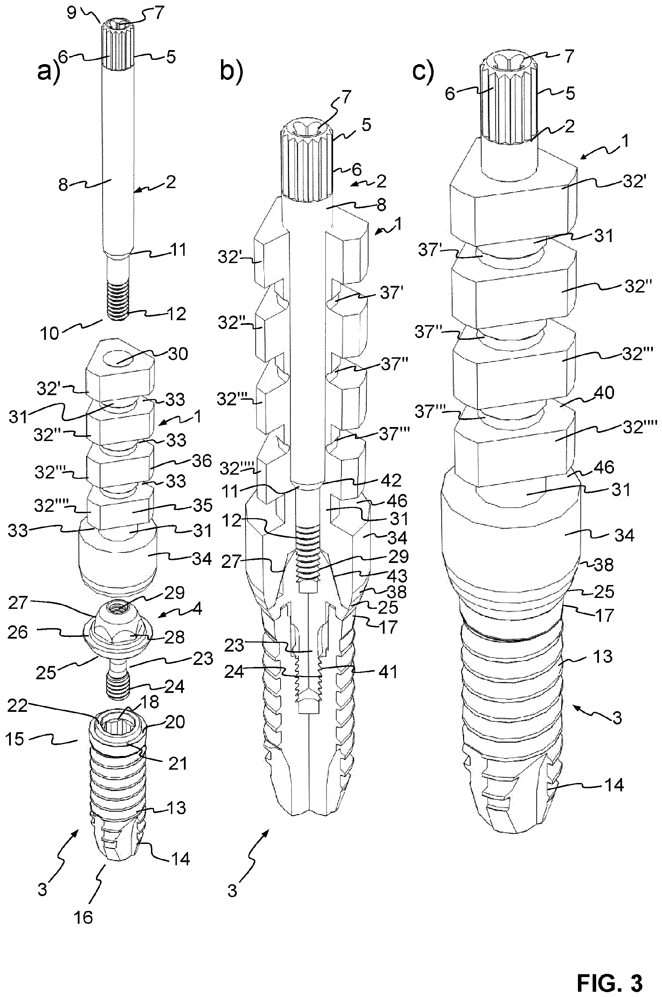

- Fig. 3: einen Abformpfosten gemäß einem weiteren Ausführungsbeispiel mit drei Sollbruchstellen, wobei in a) eine perspektivische Explosionsdarstellung angegeben ist, in b) eine in einem Viertel geschnittene perspektivische Ansicht von schräg oben, und in c) eine perspektivische Ansicht des Abformpfostens auf dem Implantat;

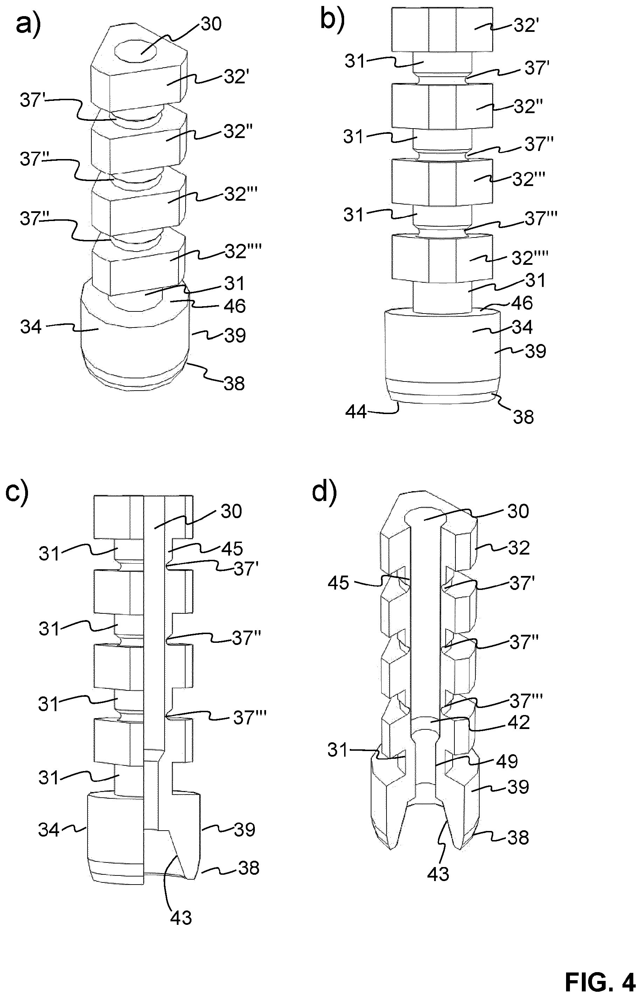

- Fig. 4: einen Abformpfosten gemäß dem weiteren Ausführungsbeispiel in Fig. 3 in unterschiedlichen Ansichten, in a) in einer perspektivischen Ansicht von schräg oben, in b) in einer Seitenansicht, in c) in einer in einem Viertel geschnittenen Seitenansicht, und in d) in einer in einem Viertel geschnittenen perspektivischen Ansicht von schräg oben;

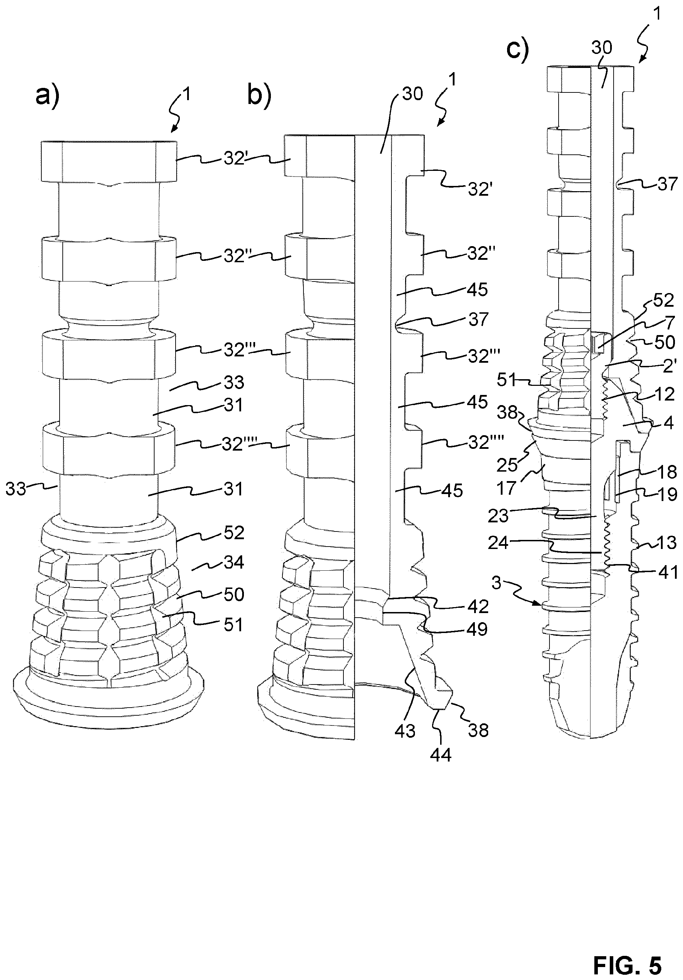

- Fig. 5: einen Formpfosten als Provisoriumsaufsatz gemäß einem weiteren Ausführungsbeispiel mit einem in apikaler Richtung erweiternden Fußabschnitt, wobei in a) eine Seitenansicht, in b) eine Seitenansicht mit einem Viertelschnitt und in c) eine Seitenansicht mit einem Viertelschnitt des aufgesetzten Formpfostens dargestellt sind;

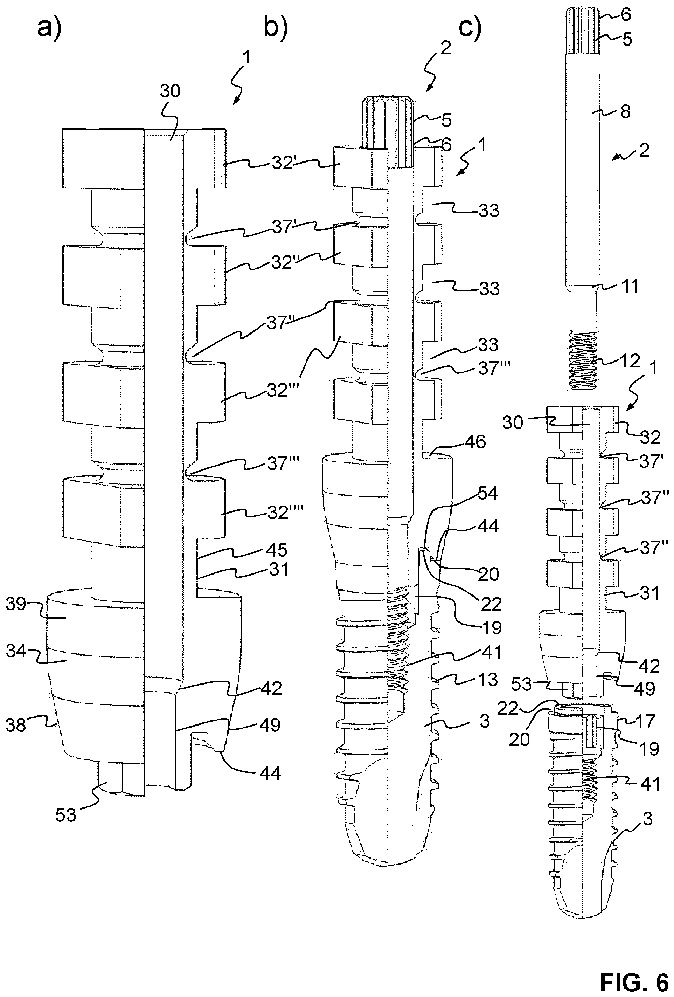

- Fig. 6: einen Abformpfosten gemäß einem weiteren Ausführungsbeispiel, der direkt auf das Implantat geschraubt wird, wobei in a) eine Seitenansicht mit einem Viertelschnitt dargestellt ist, in b) eine Seitenansicht im Viertelschnitt aufgesetzt auf das Implantat und festgeschraubt, und in c) eine Explosionsdarstellung in einer Seitenansicht dargestellt ist;
- Fig. 7: verschiedene bevorzugte Details dieser Ausführungsbeispiel, wobei in a) die Details für einen Abformpfosten mit mehreren Sollbruchstellen dargestellt sind, sowie in b) - e) unterschiedliche Gestaltungen der Sollbruchstellen jeweils in einem Viertelschnitt in Seitenansicht angegeben sind;

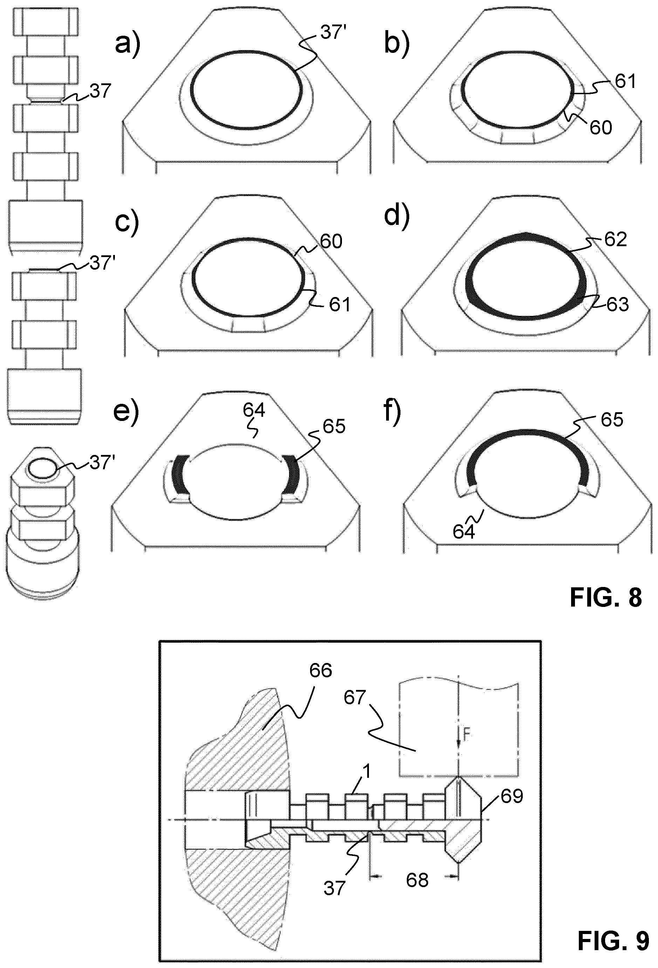

- Fig. 8: unterschiedliche Gestaltungen von Sollbruchstellen anhand eines Beispiels eines Abformpfostens, wobei links oben der Abformpfosten in einer Seitenansicht vor dem Brechen dargestellt ist, links in der Mitte der Abformpfosten nachdem der obere Teil abgebrochen ist, und unten eine perspektivische Ansicht auf einen solchen abgebrochenen Abformpfosten, und wobei in a)-f) unterschiedliche Varianten der Sollbruchstellen anhand von perspektivischen Ansichten auf die abgebrochene Sollbruchstelle dargestellt sind;
- Fig. 9: einen Aufbau zur Bestimmung der Momente und Kräfte an der Sollbruchstelle.

### BESCHREIBUNG BEVORZUGTER AUSFÜHRUNGSFORMEN

Ein Abformpfosten 1 gemäss einer ersten Ausführungsform ist in **Fig. 1** in unterschiedlichen Darstellungen wiedergegeben.

Der Abformpfosten 1 verfügt über einen zylindrischen Pfosten 31, der über die Länge des Abformpostens 1 mit einer Serie von radialen Erweiterungen 32, 34 versehen ist. Namentlich gibt es vom koronalen Ende 57 ausgehend vier derartige Erweiterungen 32'-32ʺʺ, und zwischen diesen grundsätzlich gleich ausgestalteten Erweiterungen 32 sind eine Serie von Verjüngungen 33 in Form von umlaufenden Rechtecknuten gebildet. Am apikalen Ende schliesst eine letzte Erweiterung in Form des apikalen Fussbereichs 34 ab.

Der Aussendurchmesser des eigentlichen Pfostens 31 erweitert sich mit anderen Worten im Bereich dieser Erweiterungen 32 wesentlich, typischerweise nimmt der Radius in diesen Bereichen um ca. mindestens 0.5 mm zu.

An seinem apikalen, das heisst dem Implantat 3 zugewandtem Ende 56 verfügt der Abformpfosten über einen apikalen Fussbereich 34. Dieser Fussbereich 34 verfügt zunächst über eine zylindrische Aussenfläche 39, die an dem dem Implantat zugewandtem apikalen Ende 56 in einen konisch zusammenlaufenden Übergangsbereich 38 übergeht. Dieser apikale Fussbereich 34, der eine Erweiterung bildet, ist wie gesagt kreiszylindrisch im Querschnitt ausgebildet, die in koronaler Richtung folgenden Erweiterungen 32 sind im Gegensatz dazu näherungsweise dreiecksförmig ausgebildet (vgl. auch **Fig. 2****),** wobei sie bei der Aussenkontur jeweils über ebene Bereiche 35 verfügen, die ein Dreieck bilden, und dazwischen über gekrümmte Übergangsbereiche 36 zwischen diesen ebenen Bereichen 35.

Ein solcher Abformpfosten 1 verfügt über eine Durchgangsöffnung 30, wobei diese Durchgangsöffnung 30 im koronalen Bereich eine grössere Querschnittsfläche aufweist, und im Rahmen einer Schulter respektive Verjüngung 42, die hier konisch zusammenlaufend ausgebildet ist, übergeht in einen verjüngten Abschnitt 49 mit geringerem Durchmesser.

Über diese Durchgangsöffnung 30 und die Schulter 42 wird der Abformpfosten 1 am Implantat 3 direkt oder mittelbar befestigt. Dazu gibt es eine Befestigungsschraube 2, die über einen zylindrischen Bereich 8 verfügt, dessen Durchmesser etwas geringer ist als der Innendurchmesser des koronalen Bereichs der Durchgangsöffnung 30. Am koronalen Ende verfügt diese Schraube 2 über einen Haltebereich 5, der auf der Aussenseite über entsprechende Aussenkonturen 6 verfügen kann, beispielsweise um die Manipulation von Hand zu erleichtern, und auf der Innenseite, zum Beispiel zum Eingriff mit einem Werkzeug, über ein Sackloch mit einer Innenstruktur 7 (vgl. **Fig. 3****).**

An seinem apikalen Ende verfügt die Schraube unterhalb der apikalen Verjüngung 11, die zur Anlage an die entsprechende Schulter 42 in der Durchgangsöffnung 30 vorgesehen ist, über einen anschliessenden Bereich mit geringerem Durchmesser, dessen Aussendurchmesser etwas geringer ist als der Innendurchmesser des Bereichs 49 der Durchgangsöffnung 30. Am apikalen Ende dieses dünneren Bereichs ist ein Aussengewinde 12 als apikales Gewinde vorgesehen.

Ein solcher Abformpfosten 1 wird nun mit einer solchen Schraube 2 an einem Implantat 3 befestigt. Hier ist beispielsweise beispielhaft ein Implantat 3 dargestellt, das über einen einzigen Gewindezug in Form eines Aussengewindes 13 verfügt, wobei am apikalen Ende 16 des Implantats Schneidkanten 14 im Gewinde 13 vorgesehen sind. Die konkrete Aussengestaltung des Implantats 3 im apikalen Bereich ist aber in Zusammenhang mit dem vorliegend beschriebenen Abformposten 1 nicht relevant und kann auch anders sein, beispielsweise kann der Gewindezug 13 eine unterschiedliche Höhe über die axiale Richtung aufweisen, und es kann auch mehrere Gewindezüge geben.

Das Implantat 3 geht oberhalb des Gewindes in einen koronalen Bereich 17 über, der kein Gewinde hat und dessen Aussenkontur im Wesentlichen zylindrisch ist oder leicht in koronaler Richtung aufweitend oder verjüngend. Das Implantat verfügt wie üblich am koronalen Ende über ein Sackloch 18, das im unteren Bereich über ein Innengewinde 41 verfügt, damit ein entsprechender Aufbau (Abutment oder Implantateinsatz 4) an einem solchen Implantat 3 befestigt werden kann. Oberhalb eines solches Gewindes 41 gibt es typischerweise Halterungsstrukturen 19 (diese begrenzen sämtliche Rotationsfreiheitsgrade und die beiden translatorischen Freiheitsgrade in der horizontalen Ebene), beispielsweise hexagonale Strukturen, damit beispielsweise eine Krone respektive ein Abutment unter Zuhilfenahme einer Schraube drehfest in einem solchen Implantat 3 befestigt werden kann. Am koronalen Ende verfügt dieses Implantat 3 nun über eine gestufte Strukturierung, konkret über eine in diesem Schnitt radial verlaufende Schulter 20, gefolgt von einem in diesem Schnitt axial verlaufenden Bereich und radial innen wiederum gefolgt von einer stirnseitigen Abschlussfläche 22, bevor dann das Sackloch 18 beginnt. Als Übergangsbauteil zum Abformpfosten 1 ist nun in diesem Fall ein Implantateinsatz 4 vorgesehen, der an seinem apikalen Ende über einen Bolzen 23 verfügt, der ganz unten ein Aussengewinde 24 hat, das zum Eingriff in das Innengewinde 41 im Implantat vorgesehen ist. Auf der dem Implantat 3 zugewandten Unterseite verfügt dieser Implantateinsatz 4 über eine korrespondierende gestufte Ausbildung, konkret über eine in diesem Schnitt radial dargestellte stirnseitige Anlagefläche 58, zwischen der zur Fläche 22 am Implantat 3 entsprechendes Einbauspiel vorhanden ist, und eine Anlagefläche 59, die zur Anlage an die stirnseitige Fläche 20 am Implantat vorgesehen ist, und zwischen diesen gibt es einen im Wesentlichen in diesem Schnitt axial dargestellten umlaufenden Abschnitt. So gibt es über diese Schnittstellt eine klar definierte und eindeutige relative Position zwischen Implantat und Implantateinsatz definierende Anlagestruktur.

Aussenseitig verfügt der Implantateinsatz 4 über eine umlaufende Anschlussflanke 25, die leicht in koronaler Richtung aufweitend ausgebildet ist und einen glatten Übergang zum koronalen Bereich 17 gewährleistet.

Wie erwähnt wird ein solcher Implantateinsatz 4 in einem ersten Schritt in das fixierte oder bereits sogar eingewachsene Implantat 3 eingeschraubt, indem es mit dem Gewinde 24 in das Innengewinde 41 des Implantats 3 eingeschraubt wird. Um dies zu ermöglichen, sind im koronalen Bereich des Implantateinsatzes 4 axiale Hex-Strukturen 28 oder ähnliche Strukturen, um ein Werkzeug angreifen zu lassen, vorgesehen. Wichtig ist nun, dass dieser Implantateinsatz 4 an seinem koronalen Ende wiederrum über ein Sackloch 29 mit einem Innengewinde verfügt. Zudem ist die Kontur im oberen Bereich als in koronaler Richtung zusammenlaufender Konus 27 ausgebildet. Dieser Konus 27 liegt gegenüber einem Gegenkonus 43, der in apikaler Richtung aufweitend in der Durchgangsbohrung 30 des Abformpfostens 1 apikal angrenzend an den verjüngten Abschnitt 49 angeordnet ist, diese beiden Flächen 27 und 43 kommen aber nicht in Anlage.

Der Abformpfosten 1 kommt mit seinem apikalen Ende in Form der stirnseitigen apikalen Anschlagfläche 44 in Anlage mit einem stirnseitigen Anschlagbereich 26 des Implantateinsatzes 4. Damit auch hier aussenseitig ein glatter Übergang gewährleistet ist, verfügt der apikale Fussbereich 34 des Abformpfostens 1 als Erweiterung über einen konisch zusammenlaufenden Übergangsbereich 38, dessen Dimensionierung der Anschlussflanke 25 des Implantateinsatzes 4 angepasst ist.

Wie dies insbesondere anhand von Fig. 1 **c)** erkannt werden kann, ist entsprechend im zusammengesetzten Zustand der Abformpfosten über die Fläche 44 in Anlage mit der Fläche 26 des Implantateinsatzes.

Besonders ist nun vor allem, dass im Bereich des zweitobersten Verjüngungsabschnitts 33 im Nutboden der Verjüngung eine umlaufende Vertiefung ausgebildet ist, die eine Sollbruchstelle 37 ausbildet. Diese Sollbruchstelle 37 kann dazu verwendet werden, wie dies anhand von Fig. 2 **c)** dargestellt ist, einen solchen Abformpfosten 1, der nicht zu lang aber auch nicht zu kurz sein darf, das heisst den individuellen Verhältnissen angepasst sein muss, auf die richtige Länge anzupassen, und zwar ohne eine Trennscheibe oder ein anderes spanabhebendes Werkzeug verwenden zu müssen. Es kann einfach unter Zuhilfenahme einer Zange 47 oder eines anderen Klemmwerkzeugs der eine Bereich auf der einen Seite des Abformpfostens 1 des Bereichs mit der Sollbruchstelle 37 gegriffen werden und die andere Seite beispielsweise von Hand oder mit den Fingern 48 gegriffen werden, und die Sollbruchstelle ist so eingestellt, dass ohne übermässige Kraftaufwendung dort getrennt werden kann. Dabei ist die Sollbruchstelle 37 am apikalen Ende des jeweiligen Verjüngungsbereichs angeordnet, sodass nach dem Abrechen möglichst wenig Überstand des eigentlichen zylindrischen Pfostens 31 oberhalb des obersten Erweiterungsbereichs, hier 32"', vorhanden ist.

In **Fig. 2** ist ein solcher Abformpfosten 1 mit einer einzigen Sollbruchstelle 37 allein dargestellt, und zwar in a) in einer perspektivischen Ansicht von schräg oben und in b) in einer Seitenansicht.

In **Fig. 3** ist ein analoges Ausführungsbeispiel dargestellt, gleiche Bezugszeichen bezeichnen hier analoge Bauteile wie bereits in Zusammenhang mit **Fig. 1** diskutiert (das gilt auch für die folgenden Figuren). Der Hauptunterschied zum Ausführungsbeispiel gemäss den **Fig. 1** und **2** ist darin zu sehen, dass beim Ausführungsbeispiel gemäss **Fig. 3** nun nicht nur im zweitobersten Vertiefungsbereich 33 eine Sollbruchstelle vorgesehen ist, sondern es gibt drei Sollbruchstellen 37', 37", 37‴ über die Länge des Abformpfostens. Auf diese Weise kann der Abformpfosten 1 nicht nur in einer langen und in einer kurzen Form bereitgestellt werden, sondern es ist möglich, so vier verschiedene Längen bereitzustellen, die Länge ohne Verwendung einer Sollbruchstelle, eine Länge, bei der bei der Sollbruchstelle 37' abgetrennt wird, eine Länge bei der bei der Sollbruchstelle 37" abgetrennt wird, und eine Länge bei der bei der Sollbruchstelle 37‴ getrennt wird.

In **Fig. 4** ist gemäss diesem zweiten Ausführungsbeispiel der Abformpfosten allen in weiteren verschiedenen Darstellungen allein dargestellt.

**Fig. 5** zeigt ein weiteres Ausführungsbeispiel eines Formpfostens hier ausgestaltet als Provisoriumsaufsatz, und deshalb nun mit einer anderen Ausgestaltung des apikalen Fussbereichs 34 als Erweiterung aber wiederrum nur mit einer einzigen Sollbruchstelle 37 im von der koronalen Seite gezählt zweiten Verjüngungsbereich 33.

Der Fussbereich 34 verfügt hier über eine sich in apikaler Richtung leicht erweiternde zylindrische Mantelfläche 52, die umlaufend über Einschnitte 50 verfügt und zusätzlich über axiale Einschnitte 51 (konische Gewindenut, welche durch axiale Einschnitte ergänzt ist). In diesem Fall wird wiederrum durch die stirnseitige apikale Anschlagfläche 44 ein analoger Kontakt zum Implantateinsatz gewährleistet.

Hier wurde nun aber zur Befestigung keine lange, im befestigten Zustand über das koronale Ende des Formpfostens 1 hinaus ragende Befestigungsschraube 2 eingesetzt, sondern eine kurze Befestigungsschraube 2', die mit einem stabförmigen Werkzeug unter Eingriff in das Sackloch 7 durch die Durchgangsöffnung 30 befestigt und nach der Verwendung als Provisorium auch wieder gelöst werden muss.

Ein weiteres Ausführungsbeispiel, das ohne Zwischenschaltung eines Implantateinsatzes direkt auf das Implantat 3 gesetzt wird, ist in **Fig. 6** dargestellt. Hier wiederrum in einer Ausführungsform, bei der es drei Sollbruchstellen gibt, das gleiche ist aber ohne weiteres möglich mit nur einer Sollbruchstelle an der Position 37" oder auch an einer der anderen Sollbruchstellpositionen.

In diesem Fall verfügt der Fussbereich 34 des Abformpfostens als Erweiterung über einen kürzeren zylindrischen Bereich 39 und einen längeren konisch zusammenlaufenden Übergangsbereich 38 als Aussenkontur. Wiederum wird aber die Gestaltung so bereit gestellt, dass die Aussenkontur 38 im Wesentlichen glatt übergeht in den koronalen Bereich 17 des Implantats. In diesem Fall kommt nun an die Anschlagfläche 20 des Implantats direkt eine Anschlagfläche des Abformpfostens 1 zu liegen, namentlich die Anschlagfläche 44. Zudem ist in diesem Fall der Abformpfosten 1 so ausgebildet, dass seine Drehposition zum Implantat eindeutig definiert ist, und zwar indem eine Hex-Schnittstelle 53 zum formschlüssigen Eingriff in die entsprechende axiale Halterungsstruktur 19 im Sackloch 18 im oberen Bereich des Implantats 3 vorgesehen ist. Ein solcher Abformpfosten 1 kann unter Verwendung einer langen Schraube 2, die über das koronale Ende des Abformpfostens hinaussteht, befestigt werden, kann aber auch unter Verwendung einer kurzen Schraube, wie im Rahmen des Ausführungsbeispiels in **Fig. 5** dargestellt, befestigt werden.

Fig. 7 **a)** zeigt die Möglichkeit, die Bruchkraft für mehrere am gleichen Abformpfosten angeordneten Sollbruchstellen sukzessiv in der Bruchkraft zu gestalten, um sicherzustellen, dass nicht irrtümlicherweise zu kurz abgelängt wird, sondern sukzessiv ein Element nach dem anderem bei zunehmendem Bruchmoment abbricht. Dies kann gewährleistet werden, indem die Wandstärke 45 bei der jeweiligen Sollbruchstelle auf eine minimale verbleibende Wandstärke w₁ eingestellt wird, die in apikaler Richtung entlang des Abformpfostens von Sollbruchstelle zu Sollbruchstelle in apikaler Richtung zunimmt. So ist es beispielsweise möglich, bei der koronalen obersten Sollbruchstelle 37' eine Wandstärke w₁ von 0.05 mm einzustellen, bei der folgenden Sollbruchstelle 37" eine minimale Wandstärke von w₂ = 0.10 mm, und bei der am weitesten apikal angeordneten Sollbruchstelle 37‴ eine minimale verbleibende Wandstärke w₃ von 0.15 mm. Auch andere Dimensionierungen sind möglich, wobei darauf zu achten ist, dass das Bruchmoment in apikaler Richtung zunimmt.

Die Gestaltung der Sollbruchstellen ist auf unterschiedliche Weise möglich. Verschiedene Ausgestaltungen der Kerbgeometrie sind im Rahmen der Fig. 7 b) - e) illustriert.

Fig. 7 **b)** zeigt eine im Wesentlichen dreieckige Nut, die im Nutboden der Verjüngung 33 vorgesehen ist, wobei die eine Flanke des Dreiecks im Wesentlichen entlang der Ebene 40 radial nach innen geführt wird, in einen grossen Bogen, beispielsweise mit einem Radius R₁ von 0.2 mm, umgelenkt wird und dann in eine radial in koronaler Richtung aufweitende weitere umlaufende Fläche übergeht, beispielsweise mit eine, Winkel α₁ von 40°. Bei einem Innendurchmesser der Durchgangsöffnung 30 von 2 mm ist dann der Aussendurchmesser des tiefsten Punktes in einer solchen Nut beispielsweise bei R₁ von 2.1 mm angeordnet.

Eine analoge Bauweise mit einem geringeren Radius, hier R₂ von 0.1 mm, ist in Fig. 7 **c)** dargestellt. Der Öffnungswinkel α₂ liegt hier bei ca. 50°.

Es ist auch möglich, vgl. Fig. 7 **d),** die Sollbruchstelle in Form einer Rechtecknut mit abgerundeten Kanten auszubilden, R₃ = R₄ beispielsweise 0.05 mm, wobei dann eine entsprechende Nut eine Höhe h von ca. 0.5 mm haben kann. Die verbleibende Wandstärke w₄ ist dann typischerweise ebenfalls 0.05 mm.

Weiter zeigt Fig. 7 **e)** eine Sollbruchstelle in Form einer halbkreisförmigen umlaufenden Nut, die verjüngte Wandstärke 45 beträgt hier ebenfalls w₅ = 0.05 mm, und der Radius R₅ der halbkreisförmigen Nut kann beispielsweise auf 0.2 mm eingestellt werden.

**Fig. 8** zeigt unterschiedliche Ausgestaltungen der Querschnittsfläche der Sollbruchstellen. In a) ist die Variante dargestellt, bei der die Sollbruchstelle 37' als umlaufende halbrunde Vertiefung ausgebildet ist, die umlaufend die gleiche Tiefe aufweist.

In b) ist eine Variante dargestellt, bei der die Vertiefung regelmäßig umlaufend alternierend Abschnitte 60 mit geringerer verbleibender Wandstärke und Abschnitte 61 mit größerer verbleibender Wandstärke aufweist.

Auch in c) ist eine solche Variante dargestellt, wobei in diesem Fall nur drei kürzere Abschnitte 60 mit geringerer verbleibender Wandstärke ausgebildet sind und die Abschnitte 61 mit größerer verbleibender Wandstärke einen größeren Umlauf umspannen.

In d) ist eine Variante dargestellt, bei der die Wandstärke um den Umlauf variiert, sodass es dünnste Stellen 62 und dickste Stellen 63 gibt. In e) ist eine Variante dargestellt, bei der die Sollbruchstelle in Form von zwei gegenüberliegenden Schlitzen 64 ausgebildet ist, und dazwischen nur zwei gegenüberliegende Stege 65 verbleiben. Eine solche Variante ist einfach herstellbar, da nur von beiden Seiten gewissermaßen bei der Sollbruchstelle eingeschnitten werden muss, und es ergibt sich eine bevorzugte Knickrichtung für die Ablängung. Zu guter Letzt zeigt f) eine Variante, bei der nur ein einziger Schlitz 64 auf einer Seite ausgebildet ist und gegenüberliegend ein umspannender Steg 65 verbleibt.

Bei Titan Grade 4 kalt verfestigt ergeben sich für einen Kreisrohrquerschnitt und der Kerbgeometrie gemäss **Fig. 7b** (Sollbruchstelle 37) die Messwerte aus der oben angegebenen Tabelle 1. Die Bruchlast der Sollbruchstelle wird in einem statischen 2-Punkt Biegeversuch wie in **Fig. 9** dargestellt ermittelt, wobei der Formpfosten 1 mit seinem apikalen Ende in eine Spannzange 66 eingespannt wird, und über einen Prüfstempel 67 eine Prüflast mit einem Hebelarm 68 relativ zur Sollbruchstelle 37 mit einer Prüfgeschwindigkeit von 1mm/min angelegt wird. Dabei wird eine Prüflast bis zum Bruch aufgebracht. Der Hebelarm 68 zwischen Einleitung der Bruchlast über den Prüfstempel 67 und Sollbruchstelle 37 ist durch einen entsprechenden Prüfaufsatz 69 gegeben und wird mit einem Auflichtprojektor gemessen. Aus den gemessenen Werten lässt sich das Bruchmoment berechnen.

### BEZUGSZEICHENLISTE

| | | | |
|---|---|---|---|
| 1 | Formpfosten, Abformpfosten, Provisoriumsaufsatz | 13 | Gewinde von 3 |
| | | 14 | Schneidkanten in 13 |
| 2 | Befestigungsschraube | 15 | koronales Ende von 3 |
| 3 | Implantat | 16 | apikales Ende von 3 |
| 4 | Implantateinsatz, Abutment | 17 | koronaler Bereich von 3 ohne Gewinde |
| 5 | Haltebereich von 2 | | |
| 6 | Außenstruktur von 5 | 18 | Sackloch am koronalen Ende von 3 |
| 7 | Sackloch mit Innenstruktur von 5 | | |
| | | 19 | Halterungsstrukturen in 18 |
| 8 | zylindrischer Bereich von 2 | 20 | stirnseitige Schulter an 17 |
| 9 | koronales Ende von 2 | 21 | stirnseitiger Bereich von 17 |
| 10 | apikales Ende von 2 | 22 | Abschlussfläche von 17 |
| 11 | apikale Verjüngung von 2 | 23 | Bolzen von 4 |
| 12 | apikales Gewinde von 2 | 24 | Gewinde von 23 |
| 25 | Anschlussflanke von 4 | 46 | koronale Flanke von 34 |
| 26 | stirnseitiger Anschlagbereich von 4 | 47 | Zange |
| | | 48 | Hand/Finger |
| 27 | Konusbereich von 4 | 49 | verjüngter Abschnitt von 30 |
| 28 | Hex-Struktur am apikalen Ende von 27 | 50 | umlaufende Einschnitte in 34 |
| | | 51 | axiale Einschnitte in 34 |
| 29 | Sackloch mit Innengewinde in 4 | 52 | Mantelfläche von 34, Erweiterung |
| 30 | Durchgangsöffnung in 1 | 53 | Hex-Schnittstelle am apikalen Ende von 34 |
| 31 | zylindrischer Pfosten | | |
| 32 | Erweiterungen von 31 | 54 | Fläche an 34 |
| 33 | Verjüngung inzwischen 32 | 55 | verjüngte Wandstärke 45 im Bereich von 37 |
| 34 | Erweiterung, apikaler Fußbereich von 1 | | |
| | | 56 | apikales Ende von 1 |
| 35 | ebene Bereiche von 32 | 57 | koronales Ende von 1 |
| 36 | gekrümmte Übergangsbereiche zwischen 35 von 32 | 58 | Fläche von 4 |
| | | 59 | Anlagefläche von 4 an 20 |
| | | 60 | Abschnitte der Vertiefung mit geringerer Wandstärke |
| 37 | Sollbruchstelle in 31 respektive 33 | | |
| | | 61 | Abschnitte der Vertiefung mit größerer Wandstärke |
| 37' | abgebrochene Sollbruchstelle | | |
| 38 | konisch zusammenlaufender Übergangsbereich von 34 | 62 | dünnste Stelle der Vertiefung |
| | | 63 | dickste Stelle der Vertiefung |
| 39 | zylindrischer Bereich von 34 | 64 | Schlitz |
| 40 | radiale Flanke von 32 | 65 | Steg der Sollbruchstelle |
| 41 | Innengewinde von 3 | 66 | Spannzange |
| 42 | Schulter/Verjüngung in 30 für 11 | 67 | Prüfstempel |
| | | 68 | Hebelarm |
| 43 | konischer Innenbereich am apikalen Ende von 1 | 69 | Prüfaufsatz |
| 44 | stirnseitige apikale Anschlagfläche von 1 | w₁ | Wandstärke bei 37' |
| | | w₂ | Wandstärke bei 37" |
| 45 | Wand von 1 im Bereich von 33 | w₃ | Wandstärke bei 37‴ |

## Patentansprüche

1. Formpfosten (1), insbesondere für die Erzeugung einer Abformung auf Implantat-niveau oder auf dem Niveau eines Implantateinsatzes (4) in Bezug auf bereits gesetzte Implantate (3), oder zur Verwendung als Provisoriumsaufsatz,
wobei der Formpfosten (1) einen im wesentlichen zylindrischen Pfosten (31) mit einer Durchgangsöffnung (30) für wenigstens eine axiale Befestigungsschraube (2) am Implantat (3) oder einem Implantateinsatz (4) aufweist,
und wobei der Formpfosten (1) entlang des zylindrischen Pfostens (31) wenigstens drei radiale Erweiterungen (32, 34) aufweist, zwischen denen wenigstens zwei Verjüngungen (33) ausgebildet sind,
wobei der Formpfosten (1) an seinem apikalen Ende (56) über wenigstens eine Anlagefläche (44) zur Anlage an wenigstens eine korrespondierende Anlagefläche (20) an einem Implantat (3) oder an wenigstens eine korrespondierende Anlagefläche (26) an einem zwischen dem Formpfosten (1) und dem Implantat (3) angeordneten Implantateinsatz (4) verfügt,
und wobei
entweder in den wenigstens zwei Verjüngungen (33) des Formpfostens (1) jeweils wenigstens eine Sollbruchstelle (37) vorgesehen ist,
oder in einer dem apikalen Ende (56) am nächsten zugewandten Verjüngung keine Sollbruchstelle vorgesehen ist und wenigstens eine dem apikalen Ende (56) abgewandte Verjüngung (33) wenigstens eine Sollbruchstelle (37) aufweist.

2. Formpfosten (1) nach Anspruch 1, **dadurch gekennzeichnet, dass** der Formpfosten (1) mehr als drei, vorzugsweise 4 oder 5 radiale Erweiterungen (32, 34), vorzugsweise davon die oberhalb einer ersten dem apikalen Ende (56) am nächsten zugewandten Erweiterung (34) identische radiale Erweiterungen (32), aufweist, zwischen denen entlang der Verlaufsrichtung des Formpfostens (1) jeweils Verjüngungen (33) ausgebildet sind,
wobei vorzugsweise die Verjüngungen (33) als vorzugsweise für die mehreren Verjüngungen (33) gleich gestaltete Nuten, vorzugsweise hinterschnittene Nuten oder Rechtecknuten, ausgebildet sind, und wobei in der am koronalen Ende angeordneten Verjüngung oder in der zweiten oder dritten Verjüngung gezählt vom koronalen Ende (57) des Formpfostens (1) eine einzige Sollbruchstelle (37) angeordnet ist.

3. Formpfosten (1) nach Anspruch 1, **dadurch gekennzeichnet, dass** der Formpfosten (1) mehr als 3, 4 oder 5 radiale Erweiterungen (32, 34), wobei vorzugsweise identische radiale Erweiterungen (32) oberhalb einer ersten dem apikalen Ende (56) am nächsten zugewandten Erweiterung (34) vorgesehen sind, aufweist, zwischen denen entlang der Verlaufsrichtung des Formpfostens (1) jeweils Verjüngungen (33) ausgebildet sind,
wobei vorzugsweise die Verjüngungen (33) als vorzugsweise für die mehreren Verjüngungen (33) gleich gestaltete Rechtecknuten ausgebildet sind,
und wobei in wenigstens zwei Verjüngungen (33), vorzugsweise in wenigstens drei Verjüngungen (33) Sollbruchstellen (37) vorgesehen sind, vorzugsweise in wenigstens zwei der folgenden Verjüngungen (33): in der am koronalen Ende angeordneten Verjüngung, in der zweiten und/oder der dritten Verjüngung gezählt vom koronalen Ende (57) des Formpfostens (1), wobei vorzugsweise die mehreren Sollbruchstellen (37) so ausgebildet sind, dass die Kraft, um den Formpfosten (1) bei der am weitesten in koronalen Richtung angeordneten Sollbruchstelle (37) zu kürzen, geringer ist, als bei den in apikaler Richtung folgenden Sollbruchstellen (37).

4. Formpfosten (1) nach einem der vorhergehenden Ansprüche, **dadurch gekennzeichnet, dass** in der dem apikalen Ende (56) am nächsten zugewandten Verjüngung (33) keine Sollbruchstelle vorgesehen ist.

5. Formpfosten (1) nach Anspruch 4, **dadurch gekennzeichnet, dass** der Formpfosten (1) mehr als drei, vorzugsweise 4 oder 5 radiale Erweiterungen (32, 34), vorzugsweise identische radiale Erweiterungen (32) oberhalb einer ersten dem apikalen Ende (56) am nächsten zugewandten Erweiterung (34), aufweist, zwischen denen entlang der Verlaufsrichtung des Formpfostens (1) jeweils Verjüngungen (33) ausgebildet sind, und wobei in der am koronalen Ende angeordneten Verjüngung oder in der zweiten oder dritten Verjüngung gezählt vom koronalen Ende (57) des Formpfostens (1) jeweils eine einzige Sollbruchstelle (37) angeordnet ist, oder in der ersten und der zweiten, oder in der zweiten und der dritten, oder in allen Verjüngungen jeweils eine einzige Sollbruchstelle (37) angeordnet ist.

6. Formpfosten (1) nach einem der vorhergehenden Ansprüche, **dadurch gekennzeichnet, dass** die Sollbruchstelle (37) in Form einer vorzugsweise umlaufenden Vertiefung, oder einer vorzugsweise umlaufenden Reihe von Sacklöchern, Schlitzen oder Durchgangsbohrungen, oder einer vorzugsweise umlaufenden Materialschwächung, oder einer Kombination davon, vorzugsweise in Form einer umlaufenden Vertiefung, im Nutboden der Verjüngungen (33) ausgebildet ist, vorzugsweise angrenzend an die apikal angrenzende Erweiterung (32, 34).

7. Formpfosten (1) nach einem der vorhergehenden Ansprüche, **dadurch gekennzeichnet, dass** die Sollbruchstelle (37) als vorzugsweise umlaufende Vertiefung ausgebildet ist und die Wandstärke bei der tiefsten Stelle der Vertiefung im Vergleich zur restlichen Wandstärke des Pfostens im Bereich des Nutbodens der Verjüngung (33) um wenigstens 30 % bis höchstens 99% reduziert, vorzugsweise um wenigstens 75 % bis höchstens 90% reduziert ist.

8. Formpfosten (1) nach einem der vorhergehenden Ansprüche, **dadurch gekennzeichnet, dass** die Sollbruchstelle (37) in Form einer umlaufenden Vertiefung im Schnitt
in Halbkreisform,
in Rechteckform,
in Dreieckform, vorzugsweise mit einer Flanke parallel und anschließend an die radiale Flanke (33) der apikal angrenzenden Erweiterung (32, 34) und einer in koronaler Richtung erweiternden Flanke, vorzugsweise mit einem abgerundeten Boden, ausgebildet ist.

9. Formpfosten (1) nach einem der vorhergehenden Ansprüche, **dadurch gekennzeichnet, dass** die Wandstärke (45) des Pfostens (31) bei der Sollbruchstelle (37) auf eine Stärke an der dünnsten Stelle geringer als die übrige Wandstärke im Bereich der Verjüngung (33) des Pfostens an dieser Stelle, und von weniger als 0.3 mm, vorzugsweise weniger als 0.2 mm, insbesondere vorzugsweise höchstens 1.5 mm, höchstens 1.0 mm oder höchstens 0.5 mm, ausgebildet ist.

10. Formpfosten nach einem der vorhergehenden Ansprüche, **dadurch gekennzeichnet, dass** er aus einem metallischen Werkstoff besteht, vorzugsweise aus Titan oder Titanlegierung, insbesondere Titan Grade 2, 3 oder 4, Titan-Aluminium-Vanadium (TAV), Titan-Aluminium-Niob (TAN), und wobei der Pfosten bevorzugt einen Außendurchmesser im Bereich von 1-12 Millimeter, insbesondere bevorzugt im Bereich von 2.5-7.0 Millimeter aufweist, und die Durchgangsbohrung im koronalen Abschnitt einen Innendurchmesser im Bereich von 1-5 Millimeter, insbesondere bevorzugt im Bereich von 1.5-2.5 Millimeter.

11. Formpfosten (1) nach einem der vorhergehenden Ansprüche, **dadurch gekennzeichnet, dass** die Durchgangsbohrung (30) in apikaler Richtung eine verjüngende, vorzugsweise umlaufende Schulter (42) aufweist, die als Anschlag einer entsprechenden Verjüngung (11) der Befestigungsschraube (2) vorgesehen ist.

12. Formpfosten nach einem der vorhergehenden Ansprüche, **dadurch gekennzeichnet, dass** der Formpfosten (1) an seinem apikalen Ende (56) über wenigstens eine Anlagefläche (44) zur Anlage an wenigstens eine korrespondierende Anlagefläche (20) an einem Implantat (3), vorzugsweise in Kombination mit einer Formgebung (19) im Sackloch (18) des Implantats und einer korrespondierenden Formgebung (53) am Formpfosten (1) zur Verhinderung der Drehung des Formpfostens (1) relativ zum Implantat (3),
oder **dadurch gekennzeichnet, dass** der Formpfosten (1) an seinem apikalen Ende (56) über wenigstens eine Anlagefläche (44) zur Anlage an wenigstens eine korrespondierende gestufte und/oder konische Anlagefläche (26 an einen zwischen dem Formpfosten (1) und dem Implantat (3) angeordneten Implantateinsatz (4), der in ein Sackloch (18) des Implantats eingeschraubt ist, verfügt.

13. Formpfosten nach einem der vorhergehenden Ansprüche, **dadurch gekennzeichnet, dass** die Sollbruchstelle (37) vor der Verwendung in der Abformung oder als Provisorium von Hand oder mit einem Greifwerkzeug, vorzugsweise mit einer Zange oder Pinzette, zur Ablängung des Formpfostens (1) geeignet ist, indem koronal von der jeweiligen Sollbruchstelle (37) angeordnete Abschnitte des Formpfostens (1) entfernt werden können.

14. Formpfosten (1) nach einem der vorhergehenden Ansprüche
in Kombination mit einem entsprechend korrespondierenden und an den Formpfosten (1) zur direkten Anlage vorgesehenen Implantat (3),
oder in Kombination mit einem entsprechenden korrespondierenden und an den Formpfosten (1) zur direkten Anlage vorgesehenen Implantateinsatz (4) und/oder mit einem entsprechenden korrespondierenden, an den Implantateinsatz zur direkten Anlage vorgesehenen Implantat (3).

15. Verfahren zur Ausbildung einer Abformung, **dadurch gekennzeichnet, dass** auf wenigstens ein eingesetztes Implantat (3) wenigstens ein Formpfosten nach einem der vorhergehenden Ansprüche in Form eines Abformpfostens (1) entweder direkt oder über einen Implantateinsatz (4) aufgesetzt und mit einer durch die Durchgangsöffnung (30) geführten Befestigungsschraube (2) verbunden wird,
eine plastische Formmasse über den Abformpfosten (1) und unter Ausbildung einer formschlüssigen Verbindung zwischen Abformpfosten (1) und der plastischen Formmasse gelegt und angeformt wird,
und anschließend die Befestigungsschraube (2) entfernt und die Abformung für die Ausbildung eines Zahnaufbaus verwendet wird,
wobei zur Einstellung der geeigneten Länge wenigstens eines Abformpfostens vor dessen direkter oder indirekter Befestigung am Implantat (3) dieser unter Zuhilfenahme der Sollbruchstelle (37) ohne spanabhebendes Werkzeug abgelängt wird.

## Claims

1. Moulding post (1), in particular to generate an impression at implant level or at the level of an implant insert (4) in relation to implants (3) that have already been placed, or for use as a temporary attachment,
wherein the moulding post (1) comprises a substantially cylindrical post (31) with a through-hole (30) for at least one axial fixing screw (2) on the implant (3) or an implant insert (4),
and wherein the moulding post (1) comprises, along the cylindrical post (31), at least three radial extensions (32, 34), between which at least two tapered sections (33) are configured to be present,
wherein the moulding post (1) has, at its apical end (56), at least one abutment surface (44) for abutment against at least one corresponding abutment surface (20) on an implant (3) or against at least one corresponding abutment surface (26) on an implant insert (4) arranged between the moulding post (1) and the implant (3),
and wherein
either at least one predetermined fracture point (37) is provided in each of the at least two tapered sections (33) of the moulding post (1),
or no predetermined breaking point is provided in a taper facing closest to the apical end (56), and at least one taper (33) facing away from the apical end (56) comprises at least one predetermined breaking point (37).

2. Moulding post (1) according to claim 1, **characterized in that** the moulding post (1) has more than three, preferably 4 or 5, radial expansions (32, 34), preferably comprising the radial extensions (32) identical to the one situated above a first extension (34) facing closest to the apical end (56), between which tapered sections (33) are configured along the longitudinal direction of the moulding post (1),
wherein the tapered sections (33) are preferably configured to be grooves, preferably of identical design for the plurality of tapered sections (33), preferably undercut grooves or rectangular grooves, and wherein a single predetermined breaking point (37) is arranged in the tapered section located at the coronal end or in the second or third tapered section, counting from the coronal end (57) of the moulding post (1), a single predetermined breaking point (37) is arranged.

3. Moulding post (1) according to claim 1, **characterized in that** the moulding post (1) has more than 3, 4 or 5 radial extensions (32, 34), wherein preferably identical radial expansions (32) are provided above a first expansion (34) closest to the apical end (56), between which tapered sections (33) are configured to be present along the longitudinal direction of the moulding post (1),
wherein the tapers (33) are preferably configured to be rectangular grooves, preferably of the same design for all the tapers (33),
and wherein predetermined breaking points (37) are provided in at least two tapered sections (33), preferably in at least three tapered sections (33), preferably at least two of the following tapered sections are provided (33): the tapered section located at the coronal end, the second and/or the third tapered section are provided, counted from the coronal end (57) of the moulding post (1), wherein, preferably, the plurality of predetermined breaking points (37) are configured such that the force required to shorten the moulding post (1) at the predetermined breaking point (37) situated furthest in the coronal direction is less than that required at the predetermined breaking points (37) following in the apical direction.

4. Moulding post (1) according to any one of the preceding claims, **characterized in that** no predetermined breaking point is provided in the taper (33) closest to the apical end (56).

5. Moulding post (1) according to claim 4, **characterized in that** the moulding post (1) comprises more than three, preferably 4 or 5, radial expansions (32, 34), preferably identical radial expansions (32), above a first expansion (34) facing closest to the apical end (56), the moulding post (1) comprises tapers (33) configured to be present along the longitudinal direction, and wherein a single predetermined breaking point (37) is arranged in the taper located at the coronal end or in the second or third taper, counting from the coronal end (57) of the moulding post (1), or in the first and the second, or in the second and the third, or in all the tapered sections, a single predetermined breaking point (37) is arranged in each.

6. Moulding post (1) according to one of the preceding claims, **characterized in that** the predetermined breaking point (37) takes the form of a preferably circumferential recess, or a preferably circumferential row of blind holes, slots or through-holes, or a preferably circumferential weakening of the material, or a combination thereof, preferably in the form of a circumferential recess, configured to be located in the groove base of the tapered sections (33), preferably adjacent to the apically adjacent expansion (32, 34).

7. Moulding post (1) according to one of the preceding claims, **characterized in that** the predetermined breaking point (37) is configured to be a preferably circumferential recess and the wall thickness at the deepest point of the recess is reduced by at least 30 per cent to at most 99 per cent compared with the remaining wall thickness of the post in the region of the groove base of the taper (33), preferably by at least 75 per cent to at most 90 per cent.

8. Moulding post (1) according to any one of the preceding claims, **characterized in that** the predetermined breaking point (37) takes the form of a circumferential recess which, in cross-section,
in the shape of a semicircle,
rectangular in cross-section,
in a triangular shape, preferably configured with one flank parallel to and adjoining the radial flank (33) of the apically adjacent extension (32, 34) and a flank widening in the coronal direction, preferably with a rounded base.

9. Moulding post (1) according to one of the preceding claims, **characterized in that** the wall thickness (45) of the post (31) at the predetermined breaking point (37) is reduced at its thinnest point to a thickness less than the remaining wall thickness in the region of the taper (33) of the post at this point, and is less than 0.3 mm, preferably less than 0.2 mm, in particular, preferably not more than 1.5 mm, not more than 1.0 mm or not more than 0.5 mm, configured to.

10. Moulding post according to any one of the preceding claims, **characterized in that** it consists of a metallic material, preferably titanium or a titanium alloy, in particular titanium Grade 2, 3 or 4, titanium-aluminium-vanadium (TAV), titanium-aluminium-niobium (TAN), and wherein the post preferably comprises an outer diameter in the range of 1-12 millimetres, in particular preferably in the range of 2.5-7.0 millimetres, and the through-hole in the coronal section comprises an inner diameter in the range of 1-5 millimetres, in particular preferably in the range of 1.5-2.5 millimetres.

11. Moulding post (1) according to any one of the preceding claims, **characterized in that** the through-bore (30) comprises, in the apical direction, a tapered, preferably circumferential shoulder (42), which is provided as a stop for a corresponding taper (11) of the fixing screw (2).

12. A moulding post according to one of the preceding claims, **characterized in that** the moulding post (1) has, at its apical end (56), at least one abutment surface (44) for abutment against at least one corresponding abutment surface (20) on an implant (3), preferably in combination with a shaped feature (19) in the blind hole (18) of the implant and a corresponding shaped feature (53) on the moulding post (1) to prevent rotation of the moulding post (1) relative to the implant (3),
or **characterized in that** the moulding post (1) has, at its apical end (56), at least one contact surface (44) for engagement with at least one corresponding stepped and/or conical contact surface (26) on an implant insert (4) positioned between the moulding post (1) and the implant (3), which is screwed into a blind hole (18) in the implant.

13. Moulding post according to any of the preceding claims, **characterized in that** the predetermined breaking point (37) is suitable, prior to use in the impression or as a temporary restoration, for trimming the moulding post (1) by hand or with a gripping tool, preferably with pliers or tweezers, by removing sections of the moulding post (1) situated coronally from the respective predetermined breaking point (37).

14. Moulding post (1) according to one of the preceding claims
in combination with a corresponding implant (3) that is provided to bear directly against the moulding post (1),
or in combination with a corresponding implant insert (4) that is provided to bear directly against the moulding post (1) and/or with a corresponding implant (3) that is provided to bear directly against the implant insert.

15. A method for producing an impression, **characterized in that** at least one moulding post according to any one of the preceding claims is placed on at least one inserted implant (3) in the form of a moulding post (1), either directly or via an implant insert (4), and is connected by means of a fixing screw (2) passed through the through-hole (30),
a plastic moulding compound is applied over the moulding post (1), forming a form-fitting connection between the moulding post (1) and the plastic moulding compound,
and subsequently the fixing screw (2) is removed and the impression is used to fabricate a dental restoration,
wherein, in order to set the suitable length of at least one impression post prior to its direct or indirect attachment to the implant (3), the post is cut to length using the predetermined breaking point (37) without the use of a cutting tool.

## Revendications

1. Poteau de moulage (1), en particulier destiné à la réalisation d'une empreinte au niveau d'un implant ou au niveau d'un insert d'implant (4) par rapport à des implants (3) déjà posés, ou destiné à être utilisé comme embout provisoire,
le poteau de moulage (1) comportant un pilier (31) sensiblement cylindrique muni d'un orifice traversant (30) destiné à recevoir au moins une vis de fixation axiale (2) sur l'implant (3) ou un insert d'implant (4),
et dans lequel le poteau de moulage (1) comporte, le long du pilier cylindrique (31), au moins trois élargissements radiaux (32, 34) entre lesquels sont formés au moins deux rétrécissements (33),
le poteau de moulage (1) comportant, à son extrémité apicale (56), au moins une surface d'appui (44) destinée à venir en appui contre au moins une surface d'appui correspondante (20) sur un implant (3) ou contre au moins une surface d'appui correspondante (26) sur un insert d'implant (4) disposé entre le poteau de moulage (1) et l'implant (3),
et dans lequel
soit au moins un point de rupture prédéterminé (37) est prévu dans chacun des au moins deux rétrécissements (33) du poteau de moulage (1),
soit aucun point de rupture prédéterminé n'est prévu dans un rétrécissement situé le plus près de l'extrémité apicale (56), et au moins un rétrécissement (33) situé à l'opposé de l'extrémité apicale (56) comporte au moins un point de rupture prédéterminé (37).

2. Poteau de moulage (1) selon la revendication 1, **caractérisé en ce que** le poteau de moulage (1) comporte plus de trois, de préférence 4 ou 5 élargissements radiaux (32, 34), de préférence dont les élargissements radiaux (32) situés au-dessus d'un premier élargissement (34) le plus proche de l'extrémité apicale (56) sont identiques, entre lesquels sont formés, le long de la direction d'extension du poteau de moulage (1), des rétrécissements (33),
les rétrécissements (33) étant de préférence réalisés sous forme de rainures, de préférence de conception identique pour l'ensemble des rétrécissements (33), de préférence des rainures en contre-dépouille ou des rainures rectangulaires, et un seul point de rupture (37) étant disposé dans le rétrécissement situé à l'extrémité coronale ou dans le deuxième ou le troisième rétrécissement à compter de l'extrémité coronale (57) du poteau de moulage (1), un seul point de rupture prédéterminé (37) est prévu.

3. Poteau de moulage (1) selon la revendication 1, **caractérisé en ce que** le poteau de moulage (1) comporte plus de 3, 4 ou 5 élargissements radiaux (32, 34), de préférence des élargissements radiaux identiques (32) au-dessus d'un premier élargissement (34) le plus proche de l'extrémité apicale (56), entre lesquels sont formés des rétrécissements (33) le long de la direction d'extension du poteau de moulage (1),
les rétrécissements (33) étant de préférence réalisés sous la forme de rainures rectangulaires, de préférence de configuration identique pour l'ensemble des rétrécissements (33),
et dans lesquelles, dans au moins deux rétrécissements (33), de préférence dans au moins trois rétrécissements (33), de préférence dans au moins deux des rétrécissements (33) suivants : le rétrécissement situé à l'extrémité coronale, le deuxième et/ou le troisième rétrécissement en comptant à partir de l'extrémité coronale (57) du poteau de moulage (1), les multiples points de rupture prédéterminés (37) étant de préférence conçus de telle sorte que la force nécessaire pour raccourcir le poteau de moulage (1) au niveau du point de rupture prédéterminé (37) situé le plus loin dans la direction coronale soit inférieure à celle requise pour les points de rupture prédéterminés (37) suivants dans la direction apicale.

4. Poteau de moulage (1) selon l'une des revendications précédentes, **caractérisé en ce qu'**aucun point de rupture prédéterminé n'est prévu dans le rétrécissement (33) le plus proche de l'extrémité apicale (56).

5. Poteau de moulage (1) selon la revendication 4, **caractérisé en ce que** le poteau de moulage (1) comporte plus de trois, de préférence 4 ou 5 élargissements radiaux (32, 34), de préférence des élargissements radiaux identiques (32), au-dessus d'un premier élargissement (34) le plus proche de l'extrémité apicale (56), entre lesquelles sont formés respectivement des rétrécissements (33) le long de la direction d'extension du poteau de moulage (1), et dans lequel, dans le rétrécissement situé à l'extrémité coronaire ou dans le deuxième ou le troisième rétrécissement en comptant à partir de l'extrémité coronaire (57) du poteau de moulage (1), ou bien un seul point de rupture prédéterminé (37) est disposé respectivement dans le premier et le deuxième, ou dans le deuxième et le troisième, ou dans tous les rétrécissements.

6. Poteau de moulage (1) selon l'une des revendications précédentes, **caractérisé en ce que** le point de rupture prédéterminé (37) se présente sous la forme d'un renfoncement de préférence périphérique, ou d'une rangée de préférence périphérique de trous borgnes, de fentes ou de trous traversants, ou d'un affaiblissement du matériau de préférence périphérique, ou d'une combinaison de ceux-ci, de préférence sous la forme d'un renfoncement périphérique, dans le fond de la rainure des rétrécissements (33), de préférence à proximité immédiate de l'élargissement (32, 34) adjacent à l'extrémité.

7. Poteau de moulage (1) selon l'une des revendications précédentes, **caractérisé en ce que** le point de rupture prédéterminé (37) est réalisé sous la forme d'un renfoncement de préférence périphérique et **en ce que** l'épaisseur de paroi au point le plus profond du renfoncement est réduite, par rapport à l'épaisseur de paroi restante du montant dans la zone du fond de la rainure du rétrécissement (33), d'au moins 30 % à au plus 99 %, de préférence d'au moins 75 % à au plus 90 %.

8. Poteau de moulage (1) selon l'une des revendications précédentes, **caractérisé en ce que** le point de rupture prédéterminé (37) se présente sous la forme d'un renfoncement périphérique dont la section
en demi-cercle,
de forme rectangulaire,
en forme de triangle, de préférence avec un flanc parallèle et contigu au flanc radial (33) de l'élargissement (32, 34) adjacent au niveau apical, et un flanc s'élargissant dans la direction coronale, de préférence avec un fond arrondi.

9. Poteau de moulage (1) selon l'une des revendications précédentes, **caractérisé en ce que** l'épaisseur de paroi (45) du montant (31) au niveau du point de rupture prédéterminé (37) est réduite, à l'endroit le plus mince, à une épaisseur inférieure à l'épaisseur de paroi restante dans la zone de rétrécissement (33) du montant à cet endroit, et est inférieure à 0,3 mm, de préférence inférieure à 0,2 mm, en particulier de préférence au plus 1,5 mm, au plus 1,0 mm ou au plus 0,5 mm.

10. Poteau de moulage selon l'une des revendications précédentes, **caractérisé en ce qu'**il est constitué d'un matériau métallique, de préférence de titane ou d'un alliage de titane, en particulier de titane de grade 2, 3 ou 4, de titane-aluminium-vanadium (TAV), de titane-aluminium-niobium (TAN), et dans lequel le pilier présente de préférence un diamètre extérieur compris entre 1 et 12 millimètres, de préférence entre 2,5 et 7,0 millimètres, et le trou traversant dans la partie coronale présente un diamètre intérieur compris entre 1 et 5 millimètres, de préférence entre 1,5 et 2,5 millimètres.

11. Poteau de moulage (1) selon l'une des revendications précédentes, **caractérisé en ce que** le trou traversant (30) présente, dans la direction apicale, un épaulement conique (42), de préférence périphérique, qui est prévu pour servir de butée à un rétrécissement correspondant (11) de la vis de fixation (2).

12. Poteau de moulage selon l'une des revendications précédentes, **caractérisée en ce que** le poteau de moulage (1) présente, à son extrémité apicale (56), au moins une surface d'appui (44) destinée à venir en appui contre au moins une surface d'appui correspondante (20) sur un implant (3), de préférence en combinaison avec un profil (19) dans le trou borgne (18) de l'implant et un profil correspondant (53) sur le poteau de moulage (1) pour empêcher la rotation du poteau de moulage (1) par rapport à l'implant (3),
ou **caractérisé en ce que** le poteau de moulage (1) comporte, à son extrémité apicale (56), au moins une surface d'appui (44) destinée à venir en appui contre au moins une surface d'appui correspondante étagée et/ou conique (26) d'un insert d'implant (4) disposé entre le poteau de moulage (1) et l'implant (3), qui est vissé dans un trou borgne (18) de l'implant.

13. Poteau de moulage selon l'une des revendications précédentes, **caractérisé en ce que** le point de rupture prédéterminé (37) permet, avant utilisation dans la prise d'empreinte ou en tant que prothèse provisoire, de couper à longueur le poteau de moulage (1) à la main ou à l'aide d'un outil de préhension, de préférence une pince ou une pince à épiler, en retirant des sections du poteau de moulage (1) situées en direction coronaire par rapport au point de rupture prédéterminé (37) concerné.

14. Poteau de moulage (1) selon l'une des revendications précédentes
en combinaison avec un implant (3) correspondant et prévu pour venir en appui direct contre le poteau de moulage (1),
ou en combinaison avec un insert d'implant (4) correspondant et prévu pour venir en appui direct contre le poteau de moulage (1) et/ou avec un implant (3) correspondant, prévu pour venir en appui direct contre l'insert d'implant.

15. Procédé de réalisation d'une empreinte, **caractérisé en ce que**, sur au moins un implant (3) mis en place, au moins un poteau de moulage selon l'une des revendications précédentes est placé sous la forme d'un poteau de moulage (1), soit directement, soit par l'intermédiaire d'un insert d'implant (4), et est relié à une vis de fixation (2) guidée à travers l'ouverture traversante (30),
une masse de moulage plastique est déposée sur le poteau de moulage (1) et moulée de manière à former une liaison par complémentarité de forme entre le poteau de moulage (1) et la masse de moulage plastique,
puis la vis de fixation (2) est retirée et l'empreinte est utilisée pour la réalisation d'une reconstitution dentaire,
dans lequel, pour régler la longueur appropriée d'au moins un pilier d'empreinte avant sa fixation directe ou indirecte sur l'implant (3), celui-ci est coupé à la longueur souhaitée à l'aide du point de rupture prédéterminé (37), sans outil d'usinage.
